# EUROPEAN PATENT APPLICATION

(11) **EP 3 138 880 A1**
(43) Date of publication of application: **08.03.2017**
(21) Application number: 15785890.3
(22) Date of filing: 22.04.2015
(51) Int. Cl.: C08L 83/02, C03C 17/30, C08K 5/07, C08K 5/3492, C08K 9/02, C09D 1/00, C09D 5/14, C09D 7/12, C09D 183/08, C09K 3/00

(54) **LIQUID COMPOSITION AND ANTIBACTERIAL ARTICLE**

(30) Priority: 28.04.2014 JP 2014093200
(71) Applicant: Asahi Glass Company, Limited, Tokyo 100-8405 (JP)
(72) Inventor: MORITA Shimpei, Tokyo 100-8405 (JP); KODAIRA Hirokazu, Tokyo 100-8405 (JP); YONEDA Takashige, Tokyo 100-8405 (JP)
(74) Representative: Müller-Boré & Partner Patentanwälte PartG mbB
(86) International application number: PCT/JP2015/062251
(87) International publication number: WO 2015/166858

(57) **Abstract**

There are provided a liquid composition capable of producing glass for an automobile which has not only ultraviolet resistance but also an antibacterial property together and an antibacterial article for which the liquid composition is used. A liquid composition contains: an ultraviolet absorbent (a) containing one or more compounds selected from a benzophenone-based compound, a triazine-based compound, and a benzotriazole-based compound; a binder component (b) mainly constituted of a material component for forming silicon oxide-based matrix; at least one type of an antibacterial active substance (c) selected from silver, copper, zinc, and a hydrolyzable silicon compound having an antibacterial activity group; and a liquid medium (d), and an antibacterial article 1 has: a base 2; and an ultraviolet-absorbing antibacterial film 3 made with the above-described liquid composition on a surface of the base 2.

## Description

### TECHNICAL FIELD

The present invention relates to a liquid composition and an antibacterial article, in particular, relates to the liquid composition suitable for forming a coating film having ultraviolet absorptivity and an antibacterial property and the antibacterial article which is manufactured using the liquid composition and has the ultraviolet absorptivity.

### BACKGROUND ART

In recent years, attention to hygiene is required for a mobile device and a display device with a touch panel. For example, a casing of the mobile device has a high possibility that bacteria adhere thereto due to frequent use, and thereby an excellent antibacterial property is required. Further, ticket-vending machines at stations and ATMs at banks which are used by an unspecified number of people and display devices with touch panels of equipment and the like which are used in medical facilities have similar problems because they have the high possibility that various bacteria adhere thereto due to their use environments.

For example, in Patent Document 1, a manufacturing method of a product having an antibacterial surface, the manufacturing method having a step of making ions having an antibacterial effect or liquid containing a precursor of these ions adhere to a surface of the product and a step of heating the product and introducing metal ions with an amount to have the antibacterial effect to the material surface is disclosed. Further, in Patent Document 2, an antibacterial crystallized glass article in which a surface layer made up of glass and an antibacterial agent is formed on a substrate made up of crystallized glass is disclosed.

Due to such growing public antibacterial consciousness, also in automobiles, an antibacterial process for glass is required in addition to a steering wheel, a shift lever, and a seat. However, in a case of automotive glass, ultraviolet (UV) resistance is strongly demanded on a premise of securing transparency, and glass for the automobile in which the antibacterial property and the UV resistance are compatible with each other without sacrificing other performance is considered to have a high added value. However, the one in which such properties are compatible with each other has not been known yet.

### PRIOR ART DOCUMENT

### PATENT DOCUMENT

Patent Document 1: WO 2005/030665
Patent Document 2: JP-A H11-60277(KOKAI)

### SUMMARY OF INVENTION

### PROBLEMS TO BE SOLVED BY THE INVENTION

The present invention has been made from the above-described viewpoint, and it is an object thereof to provide a liquid composition capable of manufacturing glass for an automobile which has not only high ultraviolet resistance but also a high antibacterial property together and does not sacrifice other performance and an antibacterial article for which the liquid composition is used.

### MEANS FOR SOLVING THE PROBLEM

The present invention provides a liquid composition and an antibacterial article of following [1] to [17].
[1] A liquid composition containing: an ultraviolet absorbent (a) containing one or more compounds selected from a benzophenone-based compound, a triazine-based compound, and a benzotriazole-based compound; a binder component (b) mainly constituted of a material component for forming silicon oxide-based matrix; at least one type of an antibacterial active substance (c) selected from silver, copper, zinc, and a hydrolyzable silicon compound having an antibacterial activity group; and a liquid medium (d).
[2] The liquid composition according to [1], wherein the antibacterial active substance (c) is silver and exists in a state of silver alone or silver ions, and a content thereof in a solid content in the liquid medium is 0.00001 to 1 mass%.
[3] The liquid composition according to [1], wherein the antibacterial active substance (c) is copper and exists in a state of copper alone or copper ions, and a content thereof in a solid content in the liquid medium is 0.00001 to 1 mass%.
[4] The liquid composition according to [1], wherein the antibacterial active substance (c) is zinc and exists in a state of copper alone or copper ions, and a content thereof in a solid content in the liquid medium is 0.00001 to 1 mass%.
[5] The liquid composition according to [1], wherein the antibacterial active substance (c) is a hydrolyzable silicon compound having an antibacterial activity group, the antibacterial activity group is a quaternary ammonium group, and a content thereof in a solid content in the liquid medium is 1 to 25 mass%.
[6] The liquid composition according to any one of [1] to [4], wherein the antibacterial active substance (c) is metal selected from silver, copper, and zinc and contains a chelating agent (e) having a chelate-forming ability with the metal.
[7] The liquid composition according to [6], wherein the chelating agent is at least one type of a chelating agent selected from an ethylenediaminetetraacetic acid (EDTA), a 1-hydroxyethylidene-1,1-diphosphonic acid (HEDP), and salt of the ethylenediaminetetraacetic acid (EDTA) and the 1-hydroxyethylidene-1,1-diphosphonic acid (HEDP).
[8] The liquid composition according to any one of [1] to [7], wherein a pH value of the liquid composition is two to five.
[9] The liquid composition according to any one of [1] to [8], containing a hydroxyl group-containing benzophenone-based compound as the ultraviolet absorbent (a).
[10] The liquid composition according to [9], containing, as the ultraviolet absorbent (a), one or more compounds selected from the benzophenone-based compound, the triazine-based compound, and the benzotriazole-based compound which contain a silyl group having a hydrolyzable group.
[11] The liquid composition according to any one of [1] to [10], containing a tetrafunctional alkoxysilane compound as the binder component (b).
[12] The liquid composition according to any one of [1] to [11], further containing an infrared absorbent (f) containing one or more oxides selected from a tin-doped indium oxide, an antimony-doped tin oxide, and a composite tungsten oxide.
[13] The liquid composition according to any one of [1] to [12], further containing a surface oil repellent agent (i) containing a silicon compound whose surface tension is 17.5 to 30 mN/m.
[14] An antibacterial article having ultraviolet absorptivity, the antibacterial article having: a base; and an ultraviolet-absorbing antibacterial film made with the liquid composition according to any one of [1] to [13] on a surface of the base.
[15] The antibacterial article according to [14], wherein the base is a glass substrate.
[16] The antibacterial article according to [14] or [15], wherein a visible light transmittance of the antibacterial article which is measured in accordance with JIS R3212 (1998) is 70% or more, and an ultraviolet transmittance of the antibacterial article which is measured in accordance with ISO-9050 (1990) is 3% or less.
[17] The antibacterial article according to any one of [14] to [16], wherein a thickness of the ultraviolet-absorbing antibacterial film is 1.0 to 7.0 µm.

### EFFECT OF THE INVENTION

According to a liquid composition of the present invention, it is possible to manufacture an antibacterial article also having an antibacterial property in addition to ultraviolet absorptivity (ultraviolet resistance) by forming a coating film on a base surface using the liquid composition.

According to an antibacterial article of the present invention, it is possible to provide an article which has the ultraviolet absorptivity (ultraviolet resistance) and is excellent in the antibacterial property at the same time.

### BRIEF DESCRIPTION OF THE DRAWINGS

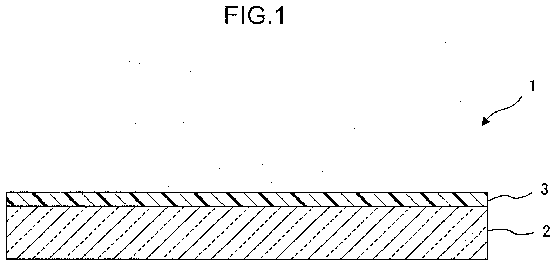

[Fig. 1] is a sectional view of an antibacterial article which is one embodiment of the present invention.

### MODE FOR CARRYING OUT THE INVENTION

An embodiment of the present invention will be described below. Note that the present invention is not construed as limitation on the following description.

### [Liquid Composition]

A liquid composition of this embodiment is suitable for formation of an antibacterial film having ultraviolet absorptivity and constituted by containing: an ultraviolet absorbent (a) containing one or more compounds selected from a benzophenone-based compound, a triazine-based compound, and a benzotriazole-based compound; a binder component (b) mainly constituted of a material component for forming silicon oxide-based matrix; at least one type of an antibacterial active substance (c) selected from silver, copper, zinc, and a hydrolyzable silicon compound having a antibacterial activity group; and a liquid medium (d) as essential components. Note that in this description, the above-described respective components may also be described only by a reference symbol, for example, the ultraviolet absorbent (a) as component (a).

Hereinafter, regarding the liquid composition of this embodiment, each of the components which the liquid composition contains will be described.

### <Ultraviolet Absorbent (a)>

The ultraviolet absorbent (a) is a material which contains one or more compounds selected from a benzophenone-based compound, a triazine-based compound, and a benzotriazole-based compound and has the ultraviolet absorptivity.

As the benzotriazole-based compound, specifically, there can be cited 2-[5-chloro(2H)-benzotriazole-2-yl]-4-methyl-6-(tert-butyl) phenol (as a commercial product, TINUVIN 326 (product name, made by Ciba Japan), or the like), octyl-3-[3-tert-4-hydroxy-5-[5-chloro-2H-benzotriazole-2-yl] propionate, 2-(2H-benzotriazole-2-yl)-4,6-di-tert-pentylphenol, 2-(2-hydroxy-5-methylphenyl) benzotriazole, 2-[2-hydroxy-3-(3,4,5,6-tetrahydrophthalimide-methyl)-5-methylphenyl] benzotriazole, 2-(2-hydroxy-5-tert-octylphenyl)-benzotriazole, 2-(2-hydroxy-5-tert-butylphenyl)-2H-benzotriazole, methyl 3-(3-(2H-benzotriazole-2-yl)-5-t-butyl-4-hydroxyphenyl) propionate, 2-(2H-benzotriazol-2-yl)-4,6-bis(1-methyl-1-phenylethyl) phenol, 2-(2H-benzotriazole-2-yl)-6-(1-methyl-1-phenylethyl)-4-(1,1,3,3-tetramethylbutyl) phenol, and the like. Among them, preferably, 2-[5-chloro(2H)-benzotriazole-2-yl]-4-methyl-6-(tert-butyl) phenol is used.

As the triazine-based compound, specifically, there can be cited 2-[4-[(2-hydroxy-3-dodecyloxypropyl)oxy]-2-hydroxyphenyl]-4,6-bis(2,4-dimethylphenyl) -1,3,5-triazine, 2-[4-[(2-hydroxy-3-(2'-ethyl)hexyl)oxy]-2-hydroxyphenyl]-4,6-bis(2,4-dimethylphenyl)-1, 3,5-triazine, 2,4-bis(2-hydroxy-4-butoxyphenyl)-6-(2,4-bis-butoxyphenyl)-1,3,5-triazine, 2-(2-hydroxy-4-[1-octylcarbonylethoxy]phenyl)-4,6-bis(4-phenylphenyl)-1,3,5-triazine, TINUVIN 477 (product name, made by Ciba Japan), and the like. Among them, preferably, the 2-(2-hydroxy-4-[1-octylcarbonylethoxy]phenyl)-4,6-bis(4-phenylphenyl)-1,3,5-triazine is used.

As the benzophenone-based compound, specifically, there can be cited 2,4-dihydroxybenzophenone, 2,2',3(or one of 4,5,6)-trihydroxybenzophenone, 2,2',4,4'-tetrahydroxybenzophenone, 2,4-dihydroxy-2',4'-dimethoxybenzophenone, 2-hydroxy-4-n-octoxybenzophenone, and the like. Among them, preferably, 2,2',4,4'-tetrahydroxybenzophenone is used.

In this embodiment, as the ultraviolet absorbent (a), one of these compounds can be used alone, or two or more of them can be used in combination. Further, in the liquid composition for forming an ultraviolet-absorbing antibacterial film, the hydroxyl group-containing benzophenone-based compound is used preferably among the above exemplified compounds since its solubility to solvent is high and its absorption wavelength band is in a desired range. Moreover, an ultraviolet-absorbing material other than them may be used in combination as necessary within a range not impairing effects of the present invention.

A content of the ultraviolet absorbent (a) in this liquid composition is preferably 1 to 50 parts by mass, more preferably 5 to 40 parts by mass, particularly preferably 8 to 30 parts by mass relative to 100 parts by mass of the binder component (b), from the points that the ultraviolet-absorbing antibacterial film to be obtained has sufficient ultraviolet absorptivity and an antibacterial property and mechanical strength of the film is secured.

Note that in this liquid composition, in order to prevent bleedout of the ultraviolet absorbent (a) from the ultraviolet-absorbing antibacterial film to be obtained, the ultraviolet absorbent (a) may be constituted as follows as necessary. For example, when the later-described binder component (b) has a reactive group and film formation is performed by polymerization of this reactive group, a component (a) is taken in a polymer chain by introducing a functional group capable of reacting with the above-described reactive group into the compound of the ultraviolet absorbent (a) and thereby the bleedout can be effectively prevented. Here, the compound used for this introduction is assumed as part of the binder component (b) when the content of the ultraviolet absorbent (a) in the liquid composition for forming the ultraviolet-absorbing antibacterial film is calculated. That is, the ultraviolet absorbent (a) to be obtained as described above also has a function of the binder component (b) together, and in consideration of this point, the above-described content is calculated by dividing a residue portion having the ultraviolet absorptivity and a portion having a binder function except the residue portion.

Here, as the ultraviolet absorbent (a) having the functional group capable of reacting with the reactive group of the binder component (b), for example, there can be cited a compound in which a silyl group having a hydrolyzable group is introduced into the benzophenone-based compounds, the triazine-based compounds, and the benzotriazole-based compounds which are exemplified above in each appropriate manner. The ultraviolet absorbent (a) is held as part of the binder component at a time of the film formation by being the ultraviolet absorbent (a) having the silyl group having the hydrolyzable group as described above. Note that the above-described ultraviolet absorbent containing the silyl group having the hydrolyzable group will be hereinafter referred to as a silylated ultraviolet absorbent.

Specifically, a reaction product (hereinafter also referred to as a "silylated benzophenone-based compound") of a hydroxyl group-containing benzophenone-based compound and a hydrolyzable silicon compound containing a group having reactivity with a hydroxyl group (for example, an epoxy group) is exemplified as the ultraviolet absorbent (a). When the silylated benzophenone-based compound is contained in the liquid composition for forming the ultraviolet-absorbing antibacterial film together with the hydrolyzable silicon compounds, they co-cross-link with each other by hydrolysis reaction to form a silicon oxide-based matrix. Thus, a group which derives from the silylated benzophenone-based compound and has the ultraviolet absorptivity is fixed to the silicon oxide-based matrix, thereby preventing the bleedout. As a result, the ultraviolet-absorbing antibacterial film to be obtained can retain the ultraviolet absorptivity for a long period.

The silylated ultraviolet absorbent will be described below with an example of the silylated benzophenone-based.compound.

As the benzophenone-based compound which is one of materials of the silylated benzophenone-based compound, a benzophenone-based compound having two to four hydroxyl groups represented by the following general formula (A) can be cited. This benzophenone-based compound is preferably used from the point that it has excellent ultraviolet absorptivity after silylation. In particular, saying from the point of the absorptivity of ultraviolet rays with a long wavelength up to 380 nm, the number of hydroxyl groups which this benzophenone-based compound has is more preferably 3 or 4. 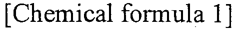 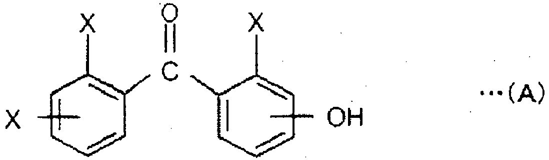 (In the formula (A), X represents a hydrogen atom or a hydroxyl group which may be the same as or different from each other, and at least one of them is a hydroxyl group.)

Moreover, among the benzophenone-based compounds having a hydroxyl group represented by the above-described general formula (A), 2,4-dihydroxybenzophenone, 2,2',3(or one of 4,5,6)-trihydroxybenzophenone, 2,2',4,4'-tetrahydroxybenzophenone, and the like are more preferred, and 2,2',4,4'-tetrahydroxybenzophenone is particularly preferred. In the reaction of silylating the benzophenone-based compound having a hydroxyl group, one of hydroxyl group-containing benzophenone-based compounds can be used alone, or a mixture of two or more of them can be used.

Further, as a hydrolyzable silicon compound which is one of the materials of the above-described silylated benzophenone-based compound and contains a group having reactivity to a hydroxyl group, for example, there can be cited a compound in which a non-hydrolyzable monovalent organic group having an epoxy group is bonded to a silicon atom of a trifunctional or bifunctional hydrolyzable silicon compound. Preferably, there can be cited 3-glycidoxypropyltrimethoxysilane, 3-glycidoxypropylmethyldimethoxysilane, 3-glycidoxypropyltriethoxysilane, 3-glycidoxypropylmethyldiethoxysilane, 2-(3,4-epoxycyclohexyl)ethyltrimethoxysilane, 2-(3,4-epoxycyclohexyl)ethylmethyldimethoxysilane, 2-(3,4-epoxycyclohexyl)ethyltriethoxysilane, and 2-(3,4-epoxycyclohexyl)ethylmethyldiethoxysilane, and the like.

Among them, from the viewpoint that solubility to the liquid composition of this embodiment can be increased, as the above-described epoxidized hydrolyzable silicon compounds, 3-glycidoxypropyltrimethoxysilane, 2-(3,4-epoxycyclohexyl)ethyltrimethoxysilane, 3-glycidoxypropylmethyldimethoxysilane, 2-(3,4-epoxycyclohexyl)ethylmethyldimethoxysilane, and the like are particularly preferably used. Note that the epoxidized hydrolyzable silicon compounds to be used at a time of silylating the hydroxyl group-containing benzophenone-based compound can be used as one of them alone or as a mixture of two or more of them.

As the method for obtaining the silylated benzophenone-based compound from the hydroxyl group-containing benzophenone-based compound and the epoxidized hydrolyzable silicon compound as described above, an ordinary method related to silylating reaction can be applied without being limited in particular.

As the silylated benzophenone-based compound used preferably in this embodiment, a reaction product obtained by reaction of one or two hydroxyl groups of the benzophenone-based compound containing three or more hydroxyl groups with the epoxy group of the epoxidized hydrolyzable silicon compound can be cited. As the above reaction product, for example, 4-[2-hydroxy-3-[(3-trimethoxysilyl)propoxy]propoxy]-2,2'4'-trihydroxybenzophenone, or the like, represented by the following formula (B) can be cited. Note that Me in the following formula (B) represents a methyl group.

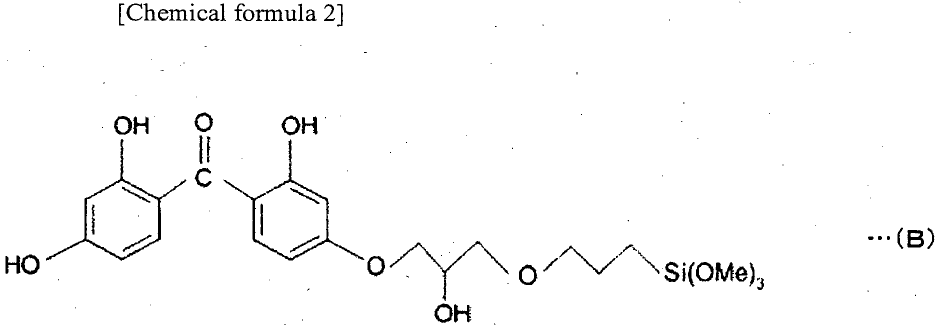

Note that in the liquid composition of this embodiment, when the binder (b) component is mainly constituted of the material component for forming silicon oxide-based matrix, and when the silylated benzophenone-based compound is contained as the ultraviolet absorbent (a), an amount of hydroxyl group-containing benzophenone-based compound residue in the silylated benzophenone-based compound may be adjusted so as to become the content of the ultraviolet absorbent in the liquid composition for forming the ultraviolet-absorbing antibacterial film which is described above. Further, a portion other than the hydroxyl group-containing benzophenone-based compound residue in the silylated benzophenone-based compound is treated as the material component for forming silicon oxide-based matrix in the binder (b) component.

### <Binder Component (b)>

The binder component (b) which the liquid composition for forming the ultraviolet-absorbing antibacterial film contains is a material component for the film formation which is mainly constituted of a material component for forming silicon oxide-based matrix. Incidentally, that the binder component (b) is mainly constituted of the material component for forming silicon oxide-based matrix means that a rate of the material component for forming silicon oxide-based matrix relative to the total amount of the binder component (b) is 50 mass% or more. Thus, in this description, a component (Y) or a material (Y) which is mainly constituted of a certain component (x) means that a content rate of the component (x) relative to the total of the component (Y) or the material (Y) is 50 mass% or more.

As the binder component (b) to be used in this embodiment, the binder component (b) which allows a silicon oxide-based matrix film to be formed by a sol-gel method and is mainly constituted of the material component for forming silicon oxide-based matrix is preferably used.

In this description, the "silicon oxide-based matrix" by the sol-gel method refers to a high molecular compound which is obtained by hydrolytic (co-)condensation of hydrolyzable silicon compounds and is the one which is linearly or three-dimensionally polymerized by siloxane bonding represented by -Si-O-Si-. That is, the material component of the silicon oxide-based matrix is constituted of at least one selected from hydrolyzable silicon compounds. Note that when the hydrolyzable silicon compounds are subjected to hydrolytic (co-)condensation in order to obtain the silicon oxide-based matrix, water and an acid catalyst or the like are necessary, but in this description they are treated as separate components from the material components of the silicon oxide-based matrix and the binder component (b).

Further, in this description, the "hydrolyzable silicon compounds" are used as a generic term for a group of silane compounds in which at least one hydrolyzable group is bonded to a silicon atom, and for a partially hydrolyzed (co-)condensate of one or more of such a group of silane compounds. Further, the number of functionalities, such as tetrafunctional, trifunctional, and bifunctional, of a hydrolyzable silicon compound hereinafter refers to the number of hydrolyzable groups bonded to a silicon atom in the compounds of the group of silane compounds. Further, the partially hydrolyzed (co-)condensates may be a compound having a hydrolyzable group and a silanol group (hydroxyl group coupled to a silicon atom), or may be a compound having only a silanol group.

In this description, as necessary, the term of partially hydrolyzed (co-)condensate is used to generally refer to partially hydrolyzed condensates and partially hydrolyzed co-condensates.

The hydrolyzable silicon compounds used for the binder component (b) are preferably at least partially constituted of a partially hydrolyzed (co-)condensate rather than constituted only of a compound (for example, tetraalkoxysilane) of the group of silane compounds. This is because there is an advantage in aspects of stability and uniform reactivity of the hydrolyzable silicon compounds in the above-described liquid composition. Accordingly, it is preferable to obtain the liquid composition depending on whether the liquid composition is constituted by using the partially hydrolyzed condensate as a material or the compound of the group of silane compounds is used as a material and the liquid composition is constituted by subjecting at least part of the compound to partially hydrolytic condensation, or the like. For example, when a tetraalkoxysilane is used, it is preferable that, the tetraalkoxysilane, a reaction catalyst thereof, and other components are mixed, and thereafter a process of subjecting at least part of the tetraalkoxysilane in this mixture to hydrolytic condensation is carried out, to thereby prepare the liquid composition. At this time, as a process of subjecting a part thereof to the hydrolytic condensation, for example, a process of stirring for a predetermined time under room temperature or while heated can be cited.

When two or more compounds (for example, a tetrafunctional hydrolyzable silicon compound and a trifunctional hydrolyzable silicon compound) of the group of silane compounds are used, by subjecting them to hydrolytic co-condensation in advance to produce a partially hydrolyzed co-condensate, a uniform film can be obtained easily when the ultraviolet-absorbing antibacterial film is formed from the liquid composition. Further, when the above-described silylated ultraviolet absorbent is used or also when the later-described silylated antibacterial active substance is used, by similarly being subjected to hydrolytic co-condensation with other hydrolyzable silicon compounds in advance, the ultraviolet absorbent can be dispersed more evenly in the silicon oxide-based matrix.

In this embodiment, the material component for the silicon oxide-based matrix preferably contains at least one tetrafunctional hydrolyzable silicon compound (or a partially hydrolyzed (co-)condensate thereof). In this case, the liquid composition of this embodiment preferably further contains a flexibility-imparting component, which will be described later, as the binder component (b). Further, the material component for forming silicon oxide-based matrix is preferably one containing at least one each of the tetrafunctional hydrolyzable silicon compound and the trifunctional hydrolyzable silicon compound (or a partially hydrolyzed condensate of each of them or a partially hydrolyzed co-condensate of them).

A particularly preferable embodiment related to the material component for forming silicon oxide-based matrix is an embodiment in which the hydrolyzable silicon compounds are constituted only of at least one tetrafunctional hydrolyzable silicon compound (or a partially hydrolyzed (co-)condensate thereof) and contained as the binder component (b) together with the flexibility-imparting component in the liquid composition, or an embodiment in which the hydrolyzable silicon compounds are constituted of at least one each of the tetrafunctional hydrolyzable silicon compound and the trifunctional hydrolyzable silicon compound (or a partially hydrolyzed condensate of each of them or a partially hydrolyzed co-condensate of them) and contained as the binder component (b) together with the flexibility-imparting component as necessary in the liquid composition.

As the hydrolyzable group which the hydrolyzable silicon compound has, specifically, an organooxy group such as an alkoxy group, an alkenyloxy group, an acyloxy group, an iminoxy group, or an aminoxy group is preferred, and an alkoxy group is particularly preferred. As the alkoxy group, an alkoxy group having 4 or less carbon atoms and an alkoxy-substituted alkoxy group having 4 or less carbon atoms (such as a 2-methoxyethoxy group) are preferred, and a methoxy group and an ethoxy group are particularly preferred.

The tetrafunctional hydrolyzable silicon compound as the above-described compound of the group of silane compounds is a compound in which four hydrolyzable groups are bonded to a silicon atom. The four hydrolyzable groups may be the same as or different from each other. The hydrolyzable groups are preferably an alkoxy group, more preferably an alkoxy group having 4 or less carbon atoms, furthermore preferably a methoxy group and an ethoxy group. Specifically, a tetramethoxysilane, a tetraethoxysilane, a tetra-n-propoxysilane, a tetra-n-butoxysilane, a tetra-sec-butoxysilane, a tetra-tert-butoxysilane, and the like can be cited. In this embodiment, a tetraethoxysilane, a tetramethoxysilane, and the like are preferably used. They may be used alone or two or more of them may be used in combination.

The trifunctional hydrolyzable silicon compound as the above-described compound of the group of silane compounds is a compound in which three hydrolyzable groups and one non-hydrolyzable group are bonded to a silicon atom. The three hydrolyzable groups may be the same as or different from each other. The hydrolyzable groups are preferably an alkoxy group, more preferably an alkoxy group having 4 or less carbon atoms, more preferably a methoxy group or an ethoxy group.

The non-hydrolyzable group is preferably a non-hydrolyzable monovalent organic group having a functional group or having no functional group, more preferably a non-hydrolyzable monovalent organic group having a functional group. The non-hydrolyzable monovalent organic group refers to an organic group in which this organic group and a silicon atom are bonded with a carbon-silicon bond.

Here, the functional group used in this description is a term comprehensively indicating a group having reactivity, which is distinguished from a mere substituent group, and this term does not include, for example, a non-reactive group such as a saturated hydrocarbon group. Further, an addition-polymerizable unsaturated double bond (ethylenic double bond) not related to formation of a main chain of a high-molecular compound, such as one which a monomer has in its side chain, is assumed as one type of functional groups. Further, the term "(meth)acrylic ..." such as a (meth)acrylic ester used in this description means both "acrylic..." and "methacrylic ...".

Among the above-described non-hydrolyzable monovalent organic groups, the non-hydrolyzable monovalent organic group having no functional group is preferably a hydrocarbon group such as an alkyl group or an aryl group, or a halogenated hydrocarbon group such as a halogenated alkyl group. The number of carbon atoms which this non-hydrolyzable monovalent organic group having no functional group has is preferably 20 or less, more preferably 10 or less. This monovalent organic group is preferably an alkyl group having 4 or less carbon atoms.

As the trifunctional hydrolyzable silicon compound having a non-hydrolyzable monovalent organic group having no functional group, specifically, there can be cited methyltrimethoxysilane, methyltriethoxysilane, methyltris(2-methoxyethoxy)silane, methyltriacetoxysilane, methyltripropoxysilane, methyltriisopropenoxysilane, methyltributoxysilane, ethyltrimethoxysilane, ethyltriethoxysilane, phenyltrimethoxysilane, phenyltriethoxysilane, phenyltriacetoxysilane, and the like. They may be used alone or two or more of them may be used in combination.

As the functional group in the above-described non-hydrolyzable monovalent organic group having a functional group, there can be cited an epoxy group, a (meth)acryloxy group, a primary or secondary amino group, an oxetanyl group, a vinyl group, a styryl group, a ureido group, a mercapto group, an isocyanate group, a cyano group, a halogen atom, and the like, and an epoxy group, a (meth)acryloxy group, a primary or secondary amino group, an oxetanyl group, a vinyl group, a ureido group, a mercapto group, and the like are preferred. In particular, an epoxy group, a primary or secondary amino group, and a (meth)acryloxy group are preferred. The monovalent organic group having an epoxy group is preferably a monovalent organic group having a glycidoxy group or a 3,4-epoxycyclohexyl group, and the organic group having a primary or secondary amino group is preferably a monovalent organic group having an amino group, a monoalkylamino group, a phenylamino group, an N-(aminoalkyl)amino group, or the like.

There may exist two or more functional groups in the monovalent organic group, but excluding the case of a primary or secondary amino group, a monovalent organic group having one functional group is preferred. In the case of a primary or secondary amino group, it may have two or more amino groups, and in this case, a monovalent organic group having one primary amino group and one secondary amino group, for example, an N-(2-aminoethyl)-3-aminopropyl group and 3-ureidopropyl group is preferred. The total number of carbon atoms of these monovalent organic groups having a functional group is preferably 20 or less, more preferably 10 or less.

As the trifunctional hydrolyzable silicon compound having a non-hydrolyzable monovalent organic group having a functional group, specifically, the following compound can be cited.

The compound is a trifunctional hydrolyzable silicon compound in which one monovalent organic group having at a terminal of an alkyl group having 2 or 3 carbon atoms and three alkoxy groups having 4 or less carbon atoms are bonded to a silicon atom. The monovalent organic group has any one of functional groups selected from a glycidoxy group, a 3,4-epoxycyclohexyl group, an amino group, an alkylamino group (number of carbon atoms which the alkyl group has is 4 or less), a phenylamino group, an N-(aminoalkyl) amino group (number of carbon atoms which the alkyl group has is 4 or less) and a (meth)acryloxy group.

In view of the reactivity with the silane compound, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, and the like are particularly preferred. They may be used alone or two or more of them may be used in combination.

The material component for forming silicon oxide-based matrix may contain a bifunctional hydrolyzable silicon compound as necessary. The bifunctional hydrolyzable silicon compound is a compound in which two hydrolyzable groups and two non-hydrolyzable groups are bonded to a silicon atom. The two hydrolyzable groups may be the same or different from each other. The hydrolyzable group is preferably an alkoxy group, more preferably an alkoxy group having 4 or less carbon atoms, furthermore preferably a methoxy group or an ethoxy group.

The non-hydrolyzable group is preferably a non-hydrolyzable monovalent organic group. The non-hydrolyzable monovalent organic group may have the same functional group as that of the above-described trifunctional hydrolyzable silicon compounds as necessary. They may be used alone or two or more of them may be used in combination.

Further, in the material component for forming silicon oxide-based matrix, the tetrafunctional hydrolyzable silicon compound, the trifunctional hydrolyzable silicon compound, and the bifunctional hydrolyzable silicon compound may be contained in the liquid composition of this embodiment as they are, or may each be contained as a partially hydrolyzed condensate, or may be contained as a partially hydrolyzed co-condensate of two or more of them.

The partially hydrolyzed (co-)condensate is an origomer (multimer) produced by hydrolysis of the hydrolyzable silicon compound and then dehydration condensation thereof. The partially hydrolyzed (co-)condensate is an origomer converted into high molecular weight at a degree of dissolving normally in a solvent. The partially hydrolyzed (co-)condensate has a hydrolyzable group or a silanol group, and has a nature to undergo further hydrolytic (co-)condensation to finally become a cured product. Only from one type of hydrolyzable silicon compound, the partially hydrolyzed condensate can be obtained, or from two or more types of hydrolyzable silicon compounds, the partially hydrolyzed co-condensate as their co-condensate can be obtained.

Note that the tetrafunctional hydrolyzable silicon compound, the trifunctional hydrolyzable silicon compound, and the bifunctional hydrolyzable silicon compound are distinguished from each other as units which finally constitute the silicon oxide-based matrix, regardless of which of the above states they are contained in the liquid composition. Hereinafter, in the binder component (b), for example, the one in which the tetrafunctional hydrolyzable silicon compound itself, its partially hydrolyzed condensate, and a component derived from the hydrolyzable silicon compound in the partially hydrolyzed co-condensate are put together will be referred to as a component derived from the tetrafunctional hydrolyzable silicon compound.

The hydrolyzable silicon compounds in the material component for forming silicon oxide-based matrix is, as described above, preferably (1) constituted only of a component derived from the tetrafunctional hydrolyzable silicon compound, or (2) constituted of a component derived from the tetrafunctional hydrolyzable silicon compound and a component derived from the trifunctional hydrolyzable silicon compound. Note that in the case of (1), in particular, the liquid composition preferably further contains a flexibility-imparting component as the binder component (b) in order to acquire sufficient crack resistance while securing a certain thickness of the ultraviolet-absorbing antibacterial film to be obtained. Further, in the case of (2), the content ratio of the component derived from the tetrafunctional hydrolyzable silicon compound and the component derived from the trifunctional hydrolyzable silicon compound is preferably 30/70 to 95/5, more preferably 40/60 to 90/10, particularly preferably 50/50 to 85/15 in a mass ratio as the component derived from the tetrafunctional hydrolyzable silicon compound/the component derived from the trifunctional hydrolyzable silicon compound.

Further, the above-described component derived from the bifunctional hydrolyzable silicon compound is used arbitrarily as necessary in (1) or (2). Its content is preferably 30 mass% or less by mass% relative to the total amount of the hydrolyzable silicon compounds.

In this liquid composition, when the binder component (b) is mainly constituted of the material component for forming silicon oxide-based matrix, the hydrolyzable silicon compounds which are this material component are subjected to hydrolytic (co)-condensation and dried, to thereby form an ultraviolet-absorbing antibacterial film. This reaction is generally carried out under existence of an acid catalyst and water, similarly to the partially hydrolytic (co-)condensation of the above-described hydrolyzable silicon compound. Therefore, the liquid composition of this embodiment contains an acid catalyst and water. Both the type and the content of the acid catalyst to be used can be the same as those in the case of the partially hydrolytic (co-)condensation.

In the binder component (b), as described above, it is possible and preferred that the flexibility-imparting component which imparts flexibility to the silicon oxide-based matrix be contained arbitrarily in the liquid composition as part of the binder component (b). By containing the flexibility-imparting component, it can contribute to preventing occurrence of crack in the ultraviolet-absorbing antibacterial film to be formed.

Note that although blending of the flexibility-imparting component is effective regardless of what constitution the material component for forming silicon oxide-based matrix has, particularly the silicon oxide-based matrix constituted only of the tetrafunctional hydrolyzable silicon compound may be insufficiently flexible, and when the liquid composition contains the tetrafunctional hydrolyzable silicon compound and the flexibility-imparting component, an ultraviolet-absorbing antibacterial film excellent in both mechanical strength and crack resistance can be produced easily.

As the flexibility-imparting component, for example, there can be cited various organic resins such as a silicone resin, an acrylic resin, a polyester resin, a polyurethane resin, a hydrophilic organic resin containing a polyoxyalkylene group, and an epoxy resin, and organic compounds such as glycerin.

When the organic resin is used as the flexibility-imparting component, its mode is preferably liquid, fine particle, or the like. The organic resin may also be a curable resin which is crosslinked and cured during curing, drying, or the like of the material component for forming silicon oxide-based matrix. In this case, within a range not impairing the characteristics of the silicon oxide-based matrix, part of the material component for forming silicon oxide-based matrix and the curable resin as the flexibility-imparting component may partially be reacted and crosslinked.

When the epoxy resin is used as the flexibility-imparting component, preferably, there may be used polyepoxides and a curing agent in combination, or polyepoxides alone. Polyepoxides are a general term for compounds having plural epoxy groups. That is, an average number of epoxy groups of polyepoxides is 2 or more, and in this embodiment, polyepoxides in which an average number of epoxy groups is 2 to 10 are preferred.

As such polyepoxides, polyglycidyl compounds such as a polyglycidyl ether compound, a polyglycidyl ester compound, and a polyglycidyl amine compound can be preferably cited. Further, the polyepoxides may be either aliphatic polyepoxides or aromatic polyepoxides, and aliphatic polyepoxides are preferred.

Among them, a polyglycidyl ether compound is preferred, and an aliphatic polyglycidyl ether compound is particularly preferred. The polyglycidyl ether compound is preferably a glycidyl ether of an alcohol having two or more functional groups, and is particularly preferably a glycidyl ether of an alcohol having three or more functional groups because light resistance can be improved. Note that such an alcohol is preferably an aliphatic alcohol, an alicyclic alcohol, or a sugar alcohol.

A polyglycidyl ether of an aliphatic polyol having three or more hydroxyl groups (one in which an average number of glycidyl groups (epoxy groups) per one molecule exceeds 2), such as a glycerol polyglycidyl ether, a diglycerol polyglycidyl ether, a polyglycerol polyglycidyl ether, and a sorbitol polyglycidyl ether, is preferred because the light resistance can be improved in particular. They may be used alone or two or more of them may be used in combination.

In this embodiment, among the flexibility-imparting components, an epoxy resin, particularly polyepoxides, polyethylene glycol (PEG), glycerin, and the like are preferred because sufficient flexibility can be imparted to the ultraviolet-absorbing antibacterial film to be obtained while the mechanical strength is maintained. Further, the epoxy resin, particularly polyepoxides, PEG, glycerin, and the like have, in addition to a function to prevent the occurrence of crack caused by light irradiation for a long period, a function to prevent a decrease in the infrared absorptivity and the ultraviolet absorptivity while securing colorless transparency of the ultraviolet-absorbing antibacterial film to be obtained, to thereby improve the light resistance. Note that in this embodiment, among them, the polyepoxides are particularly preferred.

The content of the flexibility-imparting component in the liquid composition of this embodiment is not particularly limited as long as it is an amount capable of imparting flexibility to the ultraviolet-absorbing antibacterial film to be obtained and improving the crack resistance without impairing effects thereof. The content of it is preferably 0.1 to 20 parts by mass, more preferably 1.0 to 20 parts by mass relative to 100 parts by mass of the material component for forming silicon oxide-based matrix.

Further, in the liquid composition of this embodiment, the content of the binder component (b) is preferably 3 to 30 mass%, more preferably 5 to 20 mass% relative to the amount of the total solid content in the composition.

Here, in this description, the total solid content refers to an ultraviolet-absorbing antibacterial film forming component among components contained in the liquid composition for forming the ultraviolet-absorbing antibacterial film, and indicates all the components other than volatile components of the liquid medium (d) and the like which evaporate due to heating or the like in a film forming process.

Further, the content of the material component for forming silicon oxide-based matrix in the liquid composition is preferably 1 to 20 mass%, more preferably 3 to 15 mass% as an SiO₂ content when silicon atoms contained in the material component for forming silicon oxide-based matrix are converted into SiO₂ relative to the total content of the composition. When the content of the material component for forming silicon oxide-based matrix relative to the total content of this liquid composition is less than 1 mass% as an amount converted into SiO₂, it is necessary to increase the application amount of the liquid composition in order to have a desired thickness, and consequently an exterior appearance may be deteriorated. When this content exceeds 20 mass%, the thickness of an applied film in a state that the liquid composition is applied becomes thick, and a crack may occur in the ultraviolet-absorbing antibacterial film to be obtained.

### <Antibacterial Active Substance (c)>

The antibacterial active substance (c) is at least one type of a substance which is selected from silver, copper, zinc, and a hydrolyzable silicon compound having an antibacterial activity group and has antibacterial activity. Hereinafter, this antibacterial active substance will be described by dividing a metal-based antibacterial active substance and an organic compound-based antibacterial active substance from each other.

### (Metal-based Antibacterial Active Substance)

As the metal-based antibacterial active substances in this embodiment, silver, copper, and zinc can be cited. These metal-based antibacterial active substances are the ones in which it has already been known that they have the antibacterial activity. In this embodiment, when these metals are used, the above-described metals may be contained in the liquid composition of this embodiment.

These metal-based antibacterial active substances of silver, copper, and zinc are preferably contained as metal alone, in an ionic state, in a colloidal state, or the like in the above-described liquid composition. Further, the metals may be contained as a metallic compound such as oxide or hydroxide. In particular, it is effective to contain the metals in the ionic state, and at this time the metals may be contained by supporting metal ions on zeolite and the like. Note that when the metal is used alone, it is preferably contained as metal particles whose particle diameter is 0.001 to 0.15 µm in view of dispersion stability or the like.

These metal-based antibacterial active substances are blended in consideration of a balance between the antibacterial activity to be expressed and function maintenance of the ultraviolet-absorbing antibacterial film.

When the metal-based antibacterial active substance is silver, a content ratio thereof in a solid component of the liquid composition is preferably 0.00001 to 1 mass%. Note that when a silver compound is used, mass converted into not the silver compound but silver metal may be set to the above-described range.

When the metal-based antibacterial active substance is copper, a content ratio thereof in a solid component of the liquid composition is preferably 0.00001 to 1 mass%. Note that when a copper compound is used, mass converted into not the copper compound but copper metal may be set to the above-described range.

When the metal-based antibacterial active substance is zinc, a content ratio thereof in a solid component of the liquid composition is preferably 0.00001 to 1 mass%. Note that when a zinc compound is used, mass converted into not the zinc compound but zinc metal may be set to the above-described range.

### (Organic Compound-based Antibacterial Active Substance)

The organic compound-based antibacterial active substance in this embodiment is a hydrolyzable silicon compound having an antibacterial activity group. In this embodiment, when the hydrolyzable silicon compound having the antibacterial activity group is used, the hydrolyzable silicon compound having the above-described antibacterial activity group may be contained in the liquid composition which is used for forming the ultraviolet-absorbing antibacterial film.

Here, as the antibacterial activity group, publicly known organic groups having antibacterial activity can be cited and, for example, a quaternary ammonium group, a biguanide group, an imidazole group, and the like are preferred.

When the antibacterial active substance is the organic compound-based antibacterial active substance, a content thereof in a solid component of the liquid composition is preferably 1 to 25 mass%.

Further, the hydrolyzable silicon compound having this antibacterial activity group can be obtained by reacting a hydrolyzable silicon compound and an antibacterial activity group-containing compound similarly to the above-described ultraviolet absorbent (a). That is, when the later-described binder component (b) has a reactive group and film formation is performed by polymerization of this reactive group, a component (c) is taken in a polymer chain by introducing a functional group capable of reacting with the above-described reactive group into the compound of the antibacterial active substance (c) and thereby the bleedout can be effectively prevented. In this case, because a proportion of a component derived from the hydrolyzable silicon compound which the antibacterial active substance (c) has in the whole of the composition is low, the total amount of the antibacterial active substance (c) may be calculated as the component (c) without considering a proportion of a component (b) contained in the antibacterial active substance (c).

Here, as the antibacterial active substance (c) having the functional group capable of reacting with the reactive group of the binder component (b), for example, there can be cited a compound in which a silyl group having a hydrolyzable group is introduced into a compound having the above-exemplified quaternary ammonium group in each appropriate manner. Thus, the antibacterial active substance (c) is held as part of the binder component at a time of the film formation by being the antibacterial active substance (c) having the silyl group having the hydrolyzable group. Note that hereinafter, the above-described antibacterial active substance (c) containing the silyl group having the hydrolyzable group is referred to as a silylated antibacterial active substance.

Specifically, a reaction product (hereinafter, also referred to as "silylated quaternary ammonium salt compound") of a quaternary ammonium salt compound containing a hydroxyl group and a hydrolyzable silicon compound containing a group (for example, epoxy group) having reactivity with the hydroxyl group can be exemplified as the antibacterial active substance (c). When the silylated quaternary ammonium salt compound is contained in the liquid composition for forming the ultraviolet-absorbing antibacterial film together with hydrolyzable silicon compounds, they co-cross link with each other by hydrolysis reaction to form a silicon oxide-based matrix. Thus, a group which is derived from the silylated quaternary ammonium salt compound and has the antibacterial activity is fixed to the silicon oxide-based matrix, thereby preventing the bleedout. As a result, the ultraviolet-absorbing antibacterial film to be obtained can retain the antibacterial activity for a long period.

The silylated antibacterial active substance will be described below with an example of the silylated quaternary ammonium salt compound.

As the silylated quaternary ammonium salt compound to be used preferably in this embodiment, for example, a compound and the like represented by the following formula (C) can be cited. Note that in the following formula (C), R^{C4} is preferably a methyl group or an ethyl group. Further, a chloride ion is represented as an anion in the following formula (C), but salt formed by an anion such as other halogen, a carbonate ion, or a sulfate ion is applicable. 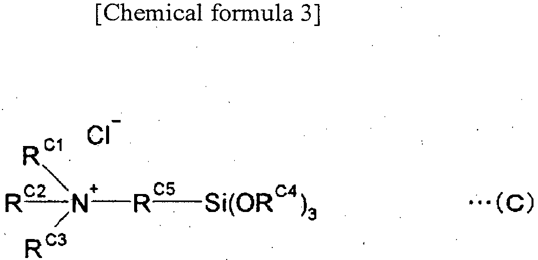 (In the formula, R^{C1} to R^{C3} are the same as or different from one another and each represent an organic group such as an alkyl group or a phenyl group having 1 to 30 carbon atoms, R^{C4} represents an alkyl group having 1 to 3 carbon atoms, and R^{C5} represents a divalent alkyl chain having 1 to 20 carbon atoms, a divalent hydrocarbon chain containing an ether group, an amide group, a carbonyl group, or an ester group having 1 to 20 carbon atoms, or the like.)

A commercial one may be used for this silylated quaternary ammonium salt compound and, for example, Polon-MF50 (made by Shin-Etsu Chemical Co., Ltd.), Etak (made by Campus Medico, Inc.), or the like can be cited.

Note that in the liquid composition of this embodiment, when the binder component (b) is mainly constituted of the material component for forming silicon oxide-based matrix and the above-described silylated quaternary ammonium salt compound is contained as the antibacterial active substance (c), a content of the silylated quaternary ammonium salt compound may be adjusted so that an amount of a hydroxyl group-containing quaternary ammonium salt compound residue in the silylated quaternary ammonium salt compound becomes the above-described content of the ultraviolet absorbent in the liquid composition of this embodiment. Further, a portion other than the hydroxyl group-containing quaternary ammonium salt compound residue of the silylated antibacterial active substance is treated as the material component for forming silicon oxide-based matrix in the binder component (b).

### <Liquid Medium (d)>

The liquid composition for forming the ultraviolet-absorbing antibacterial film is prepared by blending the ultraviolet absorbent (a), the binder component (b), and the antibacterial active substance (c) which are essential components in predetermined amounts, further blending the later-described arbitrary component and the like in arbitrary amounts, and dissolving and dispersing them in the liquid medium (d). The total solid content in the above-described liquid composition for forming the ultraviolet-absorbing antibacterial film needs to be stably dissolved or dispersed in the liquid medium (d).

The liquid medium (d) means a medium by which the ultraviolet absorbent (a), the binder component (b), and the antibacterial active substance (c) which are the essential components, and the arbitrary component are dissolved or dispersed and contained, and refers to a compound having a relatively low boiling point and being liquid at room temperature. The liquid medium (d) is constituted of an organic compound such as an alcohol and an inorganic compound such as water, and may be a mixture of two or more types. When two or more types of liquid mediums are used, the liquid medium (d) in the liquid composition for forming the ultraviolet-absorbing antibacterial film is the mixture of them. In this case, the mixture is used in a combination having compatibility so as to become an even mixture.

When each compounded component of the essential components of the ultraviolet absorbent (a), the binder component (b), and the antibacterial active substance (c), and further the later-described arbitrary components is provided individually in a state of solution or dispersion liquid, solvents or dispersion mediums to be used for the solution or the dispersion liquid may be used as they are without being removed and used as the liquid composition for forming the ultraviolet-absorbing antibacterial film. At this time, the above-described solvents or dispersion mediums become part of the liquid medium (d).

In order to obtain a state that the respective components contained in the liquid composition for forming the ultraviolet-absorbing antibacterial film are stably dissolved or dispersed, the liquid medium (d) contains at least 20 mass% or more, preferably 50 mass% or more of alcohol. As such an alcohol to be used in the liquid medium (d), methanol, ethanol, 1-propanol, 2-propanol, 1-butanol, 2-butanol, 2-methyl-1-propanol, 1-methoxy-2-propanol, 2-ethoxyethanol, 4-methyl-2-pentanol, and 2-butoxyethanol, and the like, are preferred, and among them, an alcohol having a boiling point of 80°C to 160°C is preferred in view of good solubility of the material component for forming silicon oxide-based matrix and a good coating property on the substrate. Specifically, ethanol, 1-propanol, 2-propanol, 1-butanol, 2-butanol, 2-methyl-1-propanol, 1-methoxy-2-propanol, 2-ethoxyethanol, 4-methyl-2-pentanol, and 2-butoxyethanol are preferred.

Further, when containing a solvent used in the process of producing the binder component (b) or a byproduct, for example, the partially hydrolyzed (co-)condensate of the hydrolyzable silicon compound, the liquid medium (d) to be used in the liquid composition of this embodiment may contain a lower alcohol or the like generated accompanying hydrolysis of the material hydrolyzable silicon compound (for example, silanes having an alkoky group) in the production process thereof and an alcohol or the like used as a solvent as they are.

Moreover, in the liquid composition for forming the ultraviolet-absorbing antibacterial film, as a liquid medium (d) other than the above-described ones, another liquid medium miscible with water and alcohol and different from the alcohol may be used in combination. As such a liquid medium (d), ketones such as the above-described acetone and acetylacetone; esters such as ethyl acetate and isobutyl acetate; ethers such as propylene glycol monomethyl ether, dipropylene glycol monomethyl ether, diisopropyl ether, and the like can be cited.

The amount of the liquid medium (d) contained in the liquid composition of this embodiment is preferably an amount that makes the total solid content concentration in the liquid composition be 3.5 to 50 mass%, more preferably 9 to 30 mass%. Having the amount of the liquid medium (d) within the above-described range results in good workability.

The liquid composition of this embodiment preferably contains a first chelating agent (e) which enhances stability of the (c) antibacterial active substance or an infrared absorbent (f) containing one or more oxides selected from a tin-doped indium oxide, an antimony-doped tin oxide, and a composite tungsten oxide, other than the above-described essential components, as the arbitrary components. However, when the infrared absorbent (f) is contained, the infrared absorbent (f) undergoes chelate bonding with the ultraviolet absorbent (a), thereby sometimes developing a yellow color. Accordingly, it is preferable to blend at least one type of a component selected from a dispersing agent (g) and a second chelating agent (h) capable of forming a complex with the infrared absorbent (f) in the liquid composition further, and it is more preferable to suppress the chelate bonding between the infrared absorbent (f) and the ultraviolet absorbent (a) further while blending both the components and securing dispersibility of the infrared absorbent (f). Hereinafter, these optional components will be described.

### <First Chelating Agent (e)>

The first chelating agent (e) is a compound capable of forming a complex with the metal-based antibacterial active substance of the antibacterial active substances (c). This first chelating agent (e) is the one which forms a chelate complex with the antibacterial active substance (c) of the above-described silver, copper, and zinc and, for example, there can be cited an ethylenediaminetetraacetic acid, a 1-hydroxyethylidene-1,1-diphosphonic acid, a citric acid, a hexametaphosphoric acid, a malic acid, a gluconic acid, an oxalic acid, an organic sulfonic acid, an organic phosphonic acid, and the like, and salts of them.

By containing this first chelating agent (e) in the liquid composition of this embodiment, it is possible to form the chelate complex with the antibacterial active substance (c). The antibacterial active substance (c) can be made to exist stably in an ultraviolet-absorbing antibacterial film after film formation without losing the antibacterial activity even though it is chelated. Accordingly, when the metal-based antibacterial active substance is used as the antibacterial active substance (c), containing the first chelating agent (e) makes it possible to suppress deterioration in visible light transmittance and yellowness and obtain a liquid composition capable of forming the ultraviolet-absorbing antibacterial film having better transparency.

A content of this first chelating agent (e) is preferably an amount which is a rate of 10 to 400 parts by mass relative to 100 parts by mass of the above-described metallic active substance (c). When this content is less than 10 parts by mass, there is a possibility that the metal-based antibacterial active substance cannot be sufficiently stabilized. Further, when this content exceeds 400 pars by mass, there is a possibility that transparency of the ultraviolet-absorbing antibacterial film decreases.

### <Infrared Absorbent (f)>

The infrared absorbent (f) contains one or more oxides selected from a composite tungsten oxide, an antimony-doped tin oxide (ATO), and a tin-doped indium oxide (ITO). Note that these infrared absorbents (f) are used in the form of fine particles.

As the composite tungsten oxide, specifically, a composite tungsten oxide represented by a general formula: MₓW_{y}O_{z} (where element M is one or more elements selected from Cs, Rb, K, Tl, In, Ba, Li, Ca, Sr, Fe, and Sn, W is tungsten, O is oxygen, 0.001 ≤ x/y ≤ 1, and 2.2 ≤ z/y ≤ 3.0) can be cited. The composite tungsten oxide represented by the above-described general formula effectively functions as the infrared absorbent because a sufficient amount of free electrons is generated therein.

Note that a surface of the above-described composite tungsten oxide fine particles is preferably covered with an oxide of a metal selected from Si, Ti, Zr, Al, and the like from the viewpoint of improving weather resistance. The covering method is not particularly limited, and it is possible to cover the surface of the composite tungsten oxide fine particles by adding an alkoxide of the above-described metal to a solution in which the composite tungsten oxide fine particles are dispersed.

The above-described composite tungsten oxide fine particles, the ATO fine particles, and the ITO fine particles may be used alone as the infrared absorbent (f), or two or more of them may be used in a mixture. In this embodiment, the ITO fine particles are preferably used in view of transmittance loss and environmental safety. Moreover, at least one selected from the composite tungsten oxide fine particles, ATO fine particles, and ITO fine particles and infrared-absorbing fine particles other than them may be used in combination as the infrared absorbent (f).

A mean primary particle diameter of fine particles of the infrared absorbent (f) is preferably 100 nm or less, more preferably 50 nm or less, particularly preferably 30 nm or less.

When the mean primary particle diameter is set to 100 nm or less, the tendency of aggregation of fine particles together in a liquid composition containing them does not increase, and precipitation of the fine particles can be avoided. Further, when the ultraviolet-absorbing antibacterial film is formed by a liquid composition, occurrence of haze due to scattering (increase in haze) can be suppressed, and thus the above-described particle diameter is preferred in view of maintaining transparency. Note that the lower limit of the mean primary particle diameter is not particularly limited, and it is possible to use the infrared absorbent (f) fine particles of approximately 2 nm which can be produced by the current technology. Here, the mean primary particle diameter of fine particles refers to a diameter measured from an image observed with a transmission electron microscope.

Here, a content of the infrared absorbent (f) in the liquid composition is preferably 1 to 80 parts by mass, more preferably 5 to 60 parts by mass, particularly preferably 5 to 40 parts by mass relative to 100 parts by mass of the binder component ( b), from the points that further sufficient infrared absorptivity is added to the ultraviolet-absorbing antibacterial film to be obtained and mechanical strength of the film is secured.

Note that maximum absorption wavelengths of light in ultraviolet absorbent organic compounds which the above-described ultraviolet absorbent (a) contains are in a range of 325 to 425 nm, and many of them are in a range of about 325 to 390 nm. Thus, the ultraviolet absorbent organic compounds having absorptivity also with respect to ultraviolet rays having relatively long wavelength are preferably used due to a characteristic thereof, but these compounds are considered to undergo chelate bonding with inorganic fine particles constituting the above-described infrared absorbent (f) and develop a yellow color easily because they have a phenolic hydroxyl group.

Accordingly, in order to suppress that the infrared absorbent (f) develops the yellow color by undergoing the chelate bonding with the ultraviolet absorbent (a), it is preferable to blend at least one component of the dispersing agent (g) and the second chelating agent (h) capable of forming the complex with the infrared absorbent (f) in the liquid composition of this embodiment further, moreover, it is more preferable to suppress the chelate bonding between the infrared absorbent (f) and the ultraviolet absorbent (a) while blending both the components and securing the dispersibility of the infrared absorbent (f).

### <Dispersing Agent (g)>

The dispersing agent (g) which is blended in the liquid composition of this embodiment is preferably the dispersing agent (g) having a molecular weight of 1,000 to 100,000. A compounding amount is preferably an amount which is a rate of 5 to 15 parts by mass relative to 100 parts by mass of the above-described infrared absorbent (f).

In this description, the dispersing agent (g) generally refers to compounds having a function to increase dispersion stability of fine particles in the infrared absorbent (f) by having, at least in a molecule, a portion which adheres to the surface of a fine particle constituting the infrared absorbent (f) and a portion which, after adhering to the fine particle, extends from the portion adhering to the fine particle into the dispersion medium (to be part of the liquid medium (d)), allowing stable dispersion of the fine particles in the liquid composition for forming the ultraviolet-absorbing antibacterial film by repulsion of charges or by a steric hindrance which themselves have. The later-described second chelating agent (h) differ from the dispersing agent (g) in not having the function to increase the dispersion stability, though the second chelating agent (h) adheres to the fine particles of the infrared absorbent (f).

The molecular weight of the dispersing agent (g) is preferably 1,000 to 100,000, more preferably 1,500 to 100,000, particularly preferably 2,000 to 100,000. Note that the molecular weight of the dispersing agent (g) is a mass average molecular weight measured by gel permeation chromatography (GPC). In this description, unless particularly stated otherwise, the molecular weight is a mass average molecular weight measured by gel permeation chromatography (GPC).

In this embodiment, the type of the high molecular chain of the dispersing agent (g) to be used is appropriately selected based on the type of the liquid medium (d). Since the liquid medium (d) contains water and alcohol as described above, a high molecular dispersing agent containing a polyethyleneoxide group is preferred as the dispersing agent (g). As the dispersing agent (g), use of a styrene base dispersing agent is also preferred.

### <Second Chelating Agent (h)>

In the liquid composition of this embodiment, the second chelating agent (h) is a chelating agent capable of forming the complex with the infrared absorbent (f). Therefore, when the infrared absorbent (f) is not contained, the second chelating agent (h) need not be used, either. Note that when this second chelating agent (f) contributes as an acid catalyst for a sol-gel reaction in matrix formation of the binder (b), it is sometimes contained not as a chelating agent but as the acid catalyst. As this second chelating agent (h), it is preferable to be a chelating agent whose molecular weight is 1,000 to 100,000 and to be a chelating agent in which the above-described complex to be formed exhibits substantially no absorption with respect to light having a visible wavelength.

Here, the "exhibiting substantially no absorption" means that, for example, a liquid composition, to which the second chelating agent (h) is added by 50 parts by mass relative to 100 parts by mass of the infrared absorbent (f), is used for forming a film on a base so that the infrared absorbent (f) is deposited on the base by an amount of 0.7 g/m², where a difference between a value of YI measured based on JIS K7105 (1981) relative to the obtained substrate with a coated film and YI measured only to the substrate is 2.0 or less.

Note that the second chelating agent (h) in this description generally refers to compounds which are capable of coordinate bonding by one molecule to plural positions on the surfaces of fine particles of the infrared absorbent (f), have a small steric hindrance after adhering to the fine particles due to a molecular structure, and do not have the function to increase dispersion stability of the fine particles of the infrared absorbent (f).

In the liquid composition of this embodiment, the dispersing agent (g) is one having a portion which adheres to the surface of a fine particle of the infrared absorbent (f) and a portion which extends into the dispersion medium (to be a part of the liquid medium (d)) to secure dispersion stability, and is contained by an appropriate amount which secures dispersion stability of the fine particles of the infrared absorbent (f) in the liquid composition. Normally, such an appropriate amount of the dispersing agent (g) is not always enough to cover the surfaces of fine particles of the infrared absorbent (f) sufficiently and to be capable of suppressing the chelate bonding of the ultraviolet absorbent (a). As long as the second chelating agent (h) is contained in the liquid composition of this embodiment, the dispersing agent (g) can be combined with the second chelating agent (h) to cover the surfaces of fine particles of the infrared absorbent (f) sufficiently, and the chelate bonding of the ultraviolet absorbent (a) to the infrared absorbent (f) fine particles can be suppressed sufficiently.

The second chelating agent (h) used in this embodiment is a chelating agent capable of forming a complex with the infrared absorbent (f) as described above, one in which the formed complex exhibits substantially no absorption with respect to light having a visible wavelength is preferred, and a molecular weight thereof is preferably 1,000 to 100,000, the molecular weight is more preferably 1,500 to 100,000, particularly preferably 2,000 to 100,000. With the molecular weight of the second chelating agent (h) being in the above-described range, even when an amount by which the chelate bonding of the ultraviolet absorbent (a) to the fine particles of the infrared absorbent (f) can be suppressed sufficiently by adhering and coordinating onto the surfaces of the infrared absorbent (f) fine particles together with the dispersing agent (g) is used, the second chelating agent (h) hardly bleeds out from the film after the ultraviolet-absorbing antibacterial film is formed, adhering points hardly decreases relative to molecules, and moreover, hardness of the ultraviolet-absorbing antibacterial film hardly decreases.

A content of the second chelating agent (h) in the liquid composition for forming the ultraviolet-absorbing antibacterial film is preferably in a rate of 1 to 13 parts by mass relative to 100 parts by mass of the infrared absorbent (f) as described above, and may be adjusted appropriately within the above-described range corresponding to the content of the above-described dispersing agent (g). The above-described content of the second chelating agent (h) is an amount that, when the second chelating agent (h) having the above-described molecular weight is used together with the dispersing agent (g), does not easily cause bleedout of the second chelating agent (h) from the ultraviolet-absorbing antibacterial film to be obtained, while sufficiently suppressing the chelate bonding of the ultraviolet absorbent (a) to the fine particles of the infrared absorbent (f) in the liquid composition of this embodiment.

The second chelating agent (h) may be contained in the dispersion liquid containing the fine particles of the above-described infrared absorbent (f), the dispersing agent (g), and the dispersion medium (to be part of the liquid medium (d)). However, from the point of efficiently suppressing the chelate bonding of the infrared absorbent (f) and the ultraviolet absorbent (a), preferably, the second chelating agent (h) is contained in a solution in which the ultraviolet absorbent (a) and the binder component (b) are solved in the liquid medium (d), the solution being normally prepared separately from the dispersion liquid.

The second chelating agent (h) is selected appropriately according to the type of the liquid medium (d). Since the liquid medium (d) contains water and alcohol as described above, the second chelating agent (h) soluble to these polar solvents is preferred.

As such a second chelating agent (h), specifically, a polymer in which one or more types selected from a maleic acid, an acrylic acid, and a methacrylic acid are bonded as a monomer, preferably a polymer in the above-described range of molecular weight, or the like can be cited. This polymer may be a homopolymer or a copolymer. In this embodiment, preferably, a polymaleic acid and a polyacrylic acid are used. They may be used alone or two or more of them may be used in combination.

In this embodiment, commercial products can be used as the above-described second chelating agent (h). As the commercial products, for example, there can be cited NONPOL PMA-50W (product name, made by NOF Corporation, a molecular weight: 1,200, aqueous solution with solid content of 40 to 48 mass%), or the like as the polymaleic acid, and AQUALIC HL (product name, made by Nippon Shokubai Co., Ltd, a molecular weight: 10,000, aqueous solution with solid content of 45.5 mass%), or the like as the polyacrylic acid.

Note that the second chelating agent (h) and the first chelating agent (e) may be the same compound. That is, when the compound is a compound capable of forming a complex with both the antibacterial active metal and the infrared absorbent, one type of them is sometimes used as a chelating agent. In this case, in order to express both functions sufficiently, an addition method, an addition amount, or the like can be appropriately adjusted.

In the liquid composition of this embodiment, as long as a surface oil repellent agent (i) is a silicon compound whose surface tension is 17.5 to 30 mN/m, it can be used without being particularly limited. When this surface tension of the surface oil repellent agent (i) is in this range, a sufficient antifouling property can be imparted to a surface of the coating film and compatibility with other components in the liquid composition is good, which allows forming of an even coating film. This surface tension is preferably 17.6 to 25 mN/m and more preferably 17.7 to 20 mN/m. Here, "surface tension" in this description refers to a value to be measured by a bubble pressure method (maximum bubble pressure method). Specifically, the value is a value to be measured using gaseous air at a temperature of 22°C. More specifically, a reference surface tension in this description is a surface tension measured on the above-described condition using a tensiometer (manufactured by EKO Instruments: Science line t60).

A content of the surface oil repellent agent (i) in the liquid composition of the present invention is preferably 0.01 to 10 mass%, depending on the type of the surface oil repellent agent (i), more preferably 0.1 to 3 mass% relative to the total amount of the solid content in the liquid composition. Here, in this description, a solid content refers to a coating film forming component among components contained in the liquid composition, and indicates all the components other than volatile components of the solvent (d) and the like which evaporate due to heating or the like in a film forming process.

As this surface oil repellent agent (i), for example, a hydrolyzable silane compound (i1), a hydrolyzable silane compound (i2), diorganosilicone oil (i3), and the like can be cited. They may be used alone or two or more of them may be used in combination. When the hydrolyzable silane compounds (i1), (i2) as in the above are used as the surface oil repellent agent (i), the surface oil repellent agent (i) becomes a compound having a hydroxyl group (silanol group) as a result of a hydrolysis reaction together with the binder-component (b) and then undergoes a condensation reaction among the molecules to form a Si-O-Si bond, and thereby the surface oil repellent agent (i) is easily immobilized to the coating film.

The hydrolyzable silane compound (i1) is a compound represented by the following general formula (i1) and is a silicon compound whose surface tension is 17.5 to 30 mN/m.

(A-R^{f})ₐ-Si(R²)_{b}X²(4-a-b) ... (i1)

(In the formula (i1), R^{f} is a divalent organic group having 1 to 20 carbon atoms which contains at least one fluoroalkylene group and may have an ether oxygen atom, A is a fluorine atom or -Si(R²)_{b}X²_{(3 - b)}, and R² is a substituted or unsubstituted hydrocarbon group having 1 to 10 carbon atoms, which does not have a fluorine atom, and X² represents a hydrolyzable group. a is 1 or 2, b is 0 or 1, and a + b is 1 or 2. When a plurality of A-R^{f} and X² exist, they may be different from or the same as each other.

The compound (i1) is a fluorine-containing hydrolyzable silane compound having one or two bifunctional or trifunctional hydrolyzable silyl groups.

As specific examples of the hydrolyzable silane compound (i1), the following compounds can be cited.

F(CF₂)CH₂CH₂Si(OCH₃)₃

(surface tension; 23.4 mN/m),

F(CF₂)₂CH₂CH₂Si(OCH₃)₃,

F(CF₂)₃CH₂CH₂Sᵢ(OCH₃)₃,

F(CF₂)₄CH₂CH₂Si(OCH₃)₃,

F(CF₂)₆CH₂CH₂Si(OCH₃)₃,

F(CF₂)₆CH₂CH₂CH₂Si(OCH₃)₃,

(CH₃O)₃SiCH₂CH₂(CF₂)₄CH₂CH₂Si(OCH₃)₃,

(CH₃O)₃SiCH₂CH₂(CF₂)₆CH₂CH₂Si(OCH₃)₃,

(CH₃O)₃SiCH₂CH₂(CF₂)₆CH₂CH₂CH₂Si(OCH₃)₃.

The hydrolyzable silane compound (i1) is particularly preferably F(CF₂)₆CH₂CH₂Si(OCH₃)₃ (surface tension; 18.4 mN/m) among them.

The hydrolyzable silane compound (i2) is a compound represented by the following general formula (i2) and is a silicon compound whose surface tension is 17.5 to 30 mN/m.

R³-(SiR⁴₂O)ₖ-SiR⁴₂-Y¹-Si(R⁵)ₙ₂(X³)₃₋ₙ₂ ... (i2)

(In the formula (i2), R³ represents an alkyl group having 10 carbon atoms or less or a -Y¹-Si(R⁵))ₙ₂(X³)₃₋ₙ₂ group, each R⁴ independently represents an alkyl group having 3 carbon atoms or less, each Y¹ independently represents an alkylene group having 2 to 4 carbon atoms, R⁵ represents a substituted or unsubstituted hydrocarbon group having 1 to 20 carbon atoms, which does not have a fluorine atom, and X³ represents a hydrolyzable group. k is an integer of 10 to 200, n2 is 0, 1, or 2. When a plurality of R⁵ and X³ exist, they may be different from or the same as each other.)

The compound (i2) is a linear polyorganosiloxane in which hydrolyzable silyl groups are bonded to either terminal or both terminals with an alkylene group interposed. When R³ is an alkyl group having 10 carbon atoms or less, the compound (i2) is a linear polyorganosiloxane having a hydrolyzable silyl group at either terminal. In this case, R³ is preferably an alkyl group having 1 to 5 carbon atoms and more preferably a linear alkyl group having 1 to 5 carbon atoms.

As specific examples of the compounds (i2), the following compounds can be cited. Note that k in each compound is an integer of 10 to 150.

CH₃(Si(CH₃)₂O)ₖSᵢ(CH₃)₂C₂H₄SᵢCl₃,

CH₃(Si(CH₃)₂O)ₖSi(CH₃)₂C₂H₄Si(OCH₃)₃,

CH₃(Si(CH₃)₂O)ₖSi(CH₃)₂C₂H₄Si(OC₂H₅)₃,

C₄H₉(Si(CH₃)₂O)ₖSi(CH₃)₂C₂H₄SiCl₃,

C₄H₉(Si(CH₃)₂O)ₖSi(CH₃)₂C₂H₄Si(OCH₃)₃,

C₄H₉(Si(CH₃)₂O)ₖSi(CH₃)₂C₂H₄Si(OC₂H₅)₃,

Cl₃SiC₂H₄(Si(CH₃)₂O)ₖSi(CH₃)₂C₂H₄SiCl₃,

(CH₃O)₃SiC₂H₄(Si(CH₃)₂O)ₖSi(CH₃)₂C₂H₄Si(OCH₃)₃,

(C₂H₅O)₃SiC₂H₄(Si(CH₃)₂O)ₖSi(CH₃)₂C₂H₄Si(OC₂H₅)₃.

The compound (i2) can be produced by publicly known methods, for example, in which a silane compound in which a vinyl group-containing group and a hydrolyzable group are bonded to a silicon atom is reacted to linear polydiorganosiloxane having a hydrosilyl group at a terminal under existence of a hydrosilylation catalyst, in which a silane compound in which a hydrogen atom and a hydrolyzable group are bonded to a silicon atom is reacted to linear polydiorganosiloxane having a vinyl group-containing group at a terminal under existence of a hydrosilylation catalyst, or the like.

As the diorganosilicone oil (i3), among silicon compounds generally classified under diorganosilicone oil, a silicon compound whose surface tension is 17.5 to 30 mN/m can be applied without being particularly limited.

As the diorganosilicone oil (i3), specifically, the compound (i3) (however, surface tension thereof is 17.5 to 30 mN/m.) represented by the following formula (i3) can be cited.

R⁶₃Si-O-(SiR⁷₂O)ₘ₁-(SiR⁷R⁸O)ₘ₂-SiR⁶₃ ... (i3)

(In the formula (i3), each R⁶ independently represents an alkyl group having 1 to 20 carbon atoms, each R⁷ independently represents an alkyl group, an aryl group, or an aralkyl group having 1 to 20 carbon atoms, and R⁸ represents a monovalent organic group having 1 to 20 carbon atoms which has a polyoxyalkylene group, an amide group, or an ester group. m1 is an integer of 0 to 200, m2 is an integer of 0 to 200, and m1 + m2 is an integer of 10 to 200.

In the present invention, the diorganosilicone oil (i3) may be used alone or in combination of two or more thereof. The diorganosilicone oil (i3) can be produced by a publicly known method. As the diorganosilicone oil (i3), a commercial product, for example, BYK307 (product name, made by BYK-Chemie, polyether-modified polydimethylsiloxane, surface tension; 26.4 mN/m) and the like may be used.

When the diorganosilicone oil (i3) is used as the surface oil repellent agent (i), a content thereof is preferably 0.01 to 10 mass% and more preferably 0.5 to 3 mass% relative to the total amount of the solid content in the liquid composition. When the content of the diorganosilicone oil (i3) in the liquid composition is in the above-described range, it is possible to impart the sufficient antifouling property on an upper surface of an ultraviolet absorbent coating film to be obtained and there is no possibility that transparency of the coating film is impaired, and an external appearance is impaired due to thickness unevenness and the like are impaired.

### <pH value of Liquid Composition>

A pH value of the liquid composition is preferably in a range of 2 to 5. When the pH value of the liquid composition is lower than 2, there is a possibility that problems that coloring of the ultraviolet-absorbing antibacterial film becomes large, curing does not progress sufficiently, and the like occur. On the other hand, when the pH value of the liquid composition exceeds 5, there is a possibility that stability of the liquid decreases and storage stability deteriorates.

Further, when the pH value of the liquid composition is set to be high, the visible light transmittance and the yellowness tend to be improved, and therefore when a transparent base is used, it is preferable to increase the pH value in the above-described range. The pH value at this time is preferably 3.4 or more, more preferably 3.7 or more, and particularly preferably 3.9 or more.

### <Manufacturing Method of Liquid Composition>

The liquid composition of this embodiment can be obtained by evenly mixing the above-described component (a) to component (d) which are essential components, the component (e) to the component (i) which are arbitrary components, and further other added components as necessary, in the liquid medium (d). At this time, the liquid medium (d) may be a single one or a one constituted of a plurality of types thereof, and when the plurality of types of the liquid medium (d) are used, liquid mediums having high compatibility with each other are selected, to thereby allow even mixture of them.

Further, these component (a) to component (i) and the other added components may be prepared as raw material solutions or raw material dispersion liquid by dissolving or dispersing them in the same or different liquid medium (d) for each of the components, to obtain the liquid composition by mixing them. At this time, as the raw material solutions or the raw material dispersion liquid, a plurality of components may be contained or a predetermined process may be performed. All of them are mixed finally, and the liquid medium (d) which is used for the raw material solutions or the raw material dispersion liquid constitutes part of the liquid medium (d) in the liquid composition.

Note that when the first chelating agent (e) is contained, it is preferable that a chelate complex is formed by beforehand mixing the first chelating agent (e) with a component subjecting the first chelating agent (e) to forming the chelate complex and thereafter the liquid composition is produced. On the other hand, the second chelating agent (h) is not preferably chelated with the infrared absorbent (f) in advance from the point of mixture stability in the liquid composition. Thereafter, the liquid composition is preferably constituted by mixing the other components.

### [Antibacterial Article]

An antibacterial article of this embodiment is constituted by having an ultraviolet-absorbing antibacterial film having the ultraviolet absorptivity and an antibacterial property on a surface of a base. Fig. 1 illustrates an antibacterial article which is one embodiment of the present invention. This antibacterial article 1 is constituted by having the below-described ultraviolet-absorbing antibacterial film 3 on a main surface of one side of a base 2. Here, the ultraviolet-absorbing antibacterial film 3 is formed using a liquid composition for forming the ultraviolet-absorbing antibacterial film of this embodiment. Hereinafter, a configuration of the antibacterial article of this embodiment will be described in detail.

### (1) Base

As long as a base to be used for the antibacterial article of this embodiment is a base made of material which is required generally to impart the antibacterial property, it is not particularly limited. Here, as the base, there can be cited a base of glass, plastic, metal, ceramics, wood, a metal oxide, or the like, and among them, a transparent base such as glass or plastic is preferred, and the transparent base made of glass is particularly preferred.

As glass, there can be cited an ordinary soda lime glass, an aluminosilicate glass, a borosilicate glass, a non-alkali glass, a quartz glass, or the like, and the soda lime glass is particularly preferred among them. Further, as plastic, there can be cited an acrylic resin such as polymethyl methacrylate, an aromatic polycarbonate-based resin such as polyphenylene carbonate, an aromatic polyester-based resin such as polyethylene terephthalate (PET), or the like, and polyethylene terephthalate (PET), polyphenylene carbonate, and so on are preferred among them. Among the above-described various transparent bases, the transparent base made of the soda lime glass is particularly preferred.

A shape of the base may be a flat plate or the whole surface or part thereof may have a curvature. Further, the base may have a configuration in which a plurality of substrates sandwich an adhesive layer such as an intermediate film. For example, when the material is glass, it indicates a laminated glass. A thickness of the base can be appropriately selected depending on application of the antibacterial article and is generally preferably 1 to 10 mm.

Note that when the base is a transparent base, the visible light transmittance of the transparent base is preferably 70% or more, more preferably 74% or more as visible light transmittance measured in accordance with JIS R3212 (1998).

Further, the base preferably has a reactive group on a surface thereof. As the reactive group, a hydrophilic group is preferred, and a hydroxyl group is preferred as the hydrophilic group. Further, oxygen plasma treatment, corona discharge treatment, ozonation, or the like is subjected to the base to decompose and remove organic matter adhering to the surface and to form a fine concavity/convexity structure on the surface, and thereby the base surface may have a hydrophilic property. Note that glass and the metal oxide ordinarily have a hydroxyl group on the surface.

### (2) Ultraviolet-absorbing Antibacterial Film

The ultraviolet-absorbing antibacterial film 3 which the antibacterial article 1 of this embodiment has is a film which is provided on the surface of the above-described base. The ultraviolet-absorbing antibacterial film may be ordinarily provided on either surface of the base, but may be provided on both surfaces thereof.

This ultraviolet-absorbing antibacterial film 3 is a film which is formed using the above-described liquid composition for forming the ultraviolet-absorbing antibacterial film. The ultraviolet-absorbing antibacterial film 3, specifically, is formed in a form in which the ultraviolet absorbent (a) and the antibacterial active substance (c) are dispersed over the whole of the film when the liquid medium (d) is removed and the binder component (b) is cured by applying the liquid composition for forming the ultraviolet-absorbing antibacterial film on a coating film-formed surface of the base and drying it.

At this time, the ultraviolet-absorbing antibacterial film 3 is formed in a form in which a matrix mainly constituted of a silicon oxide matrix contains a non-reactive component. The ultraviolet-absorbing antibacterial film 3 is a film which has an ultraviolet blocking function and the antibacterial property and has an infrared absorption function arbitrarily, at the same time and in which the colorless transparency is secured, the weather resistance is excellent further, and occurrence of the bleedout is suppressed.

A thickness of this ultraviolet-absorbing antibacterial film 3 is preferably 1.0 to 7.0 µm and more preferably 1.5 to 5.5 µm. When the thickness of the ultraviolet-absorbing antibacterial film 3 is less than 1.0 µm, the effects of ultraviolet absorption and arbitrarily having infrared absorption sometimes become insufficient. Further, when the thickness of the ultraviolet-absorbing antibacterial film 3 exceeds 7.0 µm, a crack sometimes occurs. Further, the thickness of the ultraviolet-absorbing antibacterial film 3 is further preferably 2.0 µm or less from the point where the coloring of the film can be suppressed.

The ultraviolet-absorbing antibacterial film 3 obtained as described above is a film which is excellent in ultraviolet blocking ability, and has the antibacterial property and has excellent adhesiveness with respect to a surface subjected to forming, in particular, glass.

Note that when the base 2 is glass which is the transparent base, this antibacterial article 1 can be used for application to glass for an automobile, glass for a building and the like, or the like for which transparency is ordinarily required. In particular, high transparency is required for the glass for the automobile in terms of safety, and a color shade and the like are also strictly restricted. This antibacterial article can block ultraviolet rays without sacrificing other performance and can further prevent contamination due to bacteria of the glass itself owing to the antibacterial property. Such an antibacterial article is applicable to an outdoor-type antibacterial glass article, for example, a window member for a vehicle such as an automobile, a window member for a building material which is fixed to a structure such as a house and a building. Note that when the antibacterial article is applied to the window member for a building, the ultraviolet-absorbing antibacterial film is preferably formed on a base surface of an indoor side, and when the antibacterial article is applied to the window member for a vehicle, the ultraviolet-absorbing antibacterial film is preferably formed on a base surface of a vehicle-interior side. This makes it effective to keep the interior of a building and the interior of an automobile clean for a long period.

Note that the above-described antibacterial article 1 has an excellent antibacterial property and is also excellent in the ultraviolet absorptivity. When this antibacterial article 1 contains the infrared absorbent (f) and also has infrared absorptivity in addition to an ultraviolet blocking property further, it also becomes excellent in a heat-ray blocking property.

The ultraviolet blocking ability in the antibacterial article 1 can be specifically evaluated as ultraviolet transmittance measured in accordance with ISO-9050 (1990) using a spectrophotometer (U-4100 manufactured by Hitachi, Ltd.). This ultraviolet transmittance is preferably 5.0% or less, more preferably 3.0% or less, and particularly preferably 1.0% or less.

Further, transmittance of light with a wavelength of 380 nm in the antibacterial article of this embodiment which is measured using a spectrophotometer (U-3500 manufactured by Hitachi, Ltd.) is preferably 21.0% or less, more preferably 14.3% or less, and particularly preferably 6.3% or less.

Moreover, the visible light transmittance in the antibacterial article of this embodiment is preferably 50% or more, more preferably 70% or more, and particularly preferably 71.5% or more as the visible light transmittance which is measured in accordance with JIS R3212 (1998).

Further, solar radiation transmittance in an antibacterial glass article when the ultraviolet-absorbing antibacterial film contains the infrared absorbent (f) is preferably 45.0% or less, more preferably 44.0% or less, and particularly preferably 43.0% or less as solar radiation transmittance measured in accordance with JIS R3106 (1998).

Further, YI in the antibacterial article of this embodiment which is calculated according to JIS K7105 (1981) is an index for yellowish color and is preferably 20 or less, and more preferably 12 or less.

That is a characteristic when the transparent base is used, but the antibacterial article of this embodiment may be a base having an opaque base. When such a base is used, a material of the base can be visually recognized through the above-described ultraviolet-absorbing antibacterial film from the outside and a product which takes advantage of an aesthetic property of the base as it is can be obtained. At that time, due to having the ultraviolet absorptivity, even when the product is placed outdoors to be irradiated with sun light or the like, it is possible to suppress a deterioration of the base due to the ultraviolet rays and improve a life cycle of the product.

### <Manufacturing Method of Antibacterial Article>

A manufacturing method of an antibacterial article of this embodiment will be described below. The antibacterial article 1 is constituted by having the ultraviolet-absorbing antibacterial film 3 having the ultraviolet absorptivity and the antibacterial property on a main surface of one side of the base 2 and can be obtained by applying a liquid composition of this embodiment on a surface of the base 2 and drying this as described above regarding the manufacture. At this time, when the liquid medium (d) is removed and the binder component (b) is cured by drying, the ultraviolet absorbent (a) and the antibacterial active substance (c) are formed in the form of being dispersed over the whole of the film.

As a specific method for forming the ultraviolet-absorbing antibacterial film 3 on the base 2, there can be cited a method including: (A1) a step of applying the liquid composition for forming the ultraviolet-absorbing antibacterial film on the base 2 to form an applied film; and (B1) a step of removing the liquid medium (d) from the obtained applied film and further performing curing of the used binder component (b) according to a film forming condition to form the ultraviolet-absorbing antibacterial film 3.

Note that in this description, a film made from the liquid composition for forming the ultraviolet-absorbing antibacterial film which contains the liquid medium (d) applied on the base 2 is referred to as "applied film", and a state where film formation has been finished completely by removing the liquid medium (d) from the applied film and performing a process such as curing according to the used binder component (b) is referred to as "ultraviolet-absorbing antibacterial film".

First, in step (A1), the liquid composition of this embodiment is applied on the base 2 to form an applied film of the composition. Note that the applied film formed here is an applied film containing the above-described liquid medium (d). The method for applying the liquid composition of this embodiment on the base 2 is not limited in particular as long as it is a method capable of applying evenly, and a publicly known method such as flow coating, dip coating, spin coating, spray coating, flexographic printing, screen printing, gravure printing, roll coating, meniscus coating, die coating, or the like can be used. The thickness of the applied film of the applied liquid is determined in consideration of the thickness of the ultraviolet-absorbing antibacterial film to be finally obtained.

In step (B1) to be performed next, the liquid medium (d) is removed from the applied film of the liquid composition for forming the ultraviolet-absorbing antibacterial film on the base 2, and the material component for forming silicon oxide-based matrix such as the above-described hydrolyzable silicon compound is cured to form the ultraviolet-absorbing antibacterial film 3.

In this case, removal of the liquid medium (d) from the applied film in step (B1) is preferably performed by heating and/or reduced pressure drying. After the applied film is formed on the base 2, temporary drying at a temperature from room temperature to about 120°C is performed preferably from the viewpoint of improving a leveling property of the applied film. Normally during this operation of this temporary drying, the liquid medium (d) is evaporated and removed in parallel therewith, and thus an operation of removing the liquid medium (d) is included in the temporary drying. The time for the temporary drying, that is, the time for the operation of removing the liquid medium (d) depends on the liquid composition for forming the ultraviolet-absorbing antibacterial film which is used for film formation and is preferably about 3 seconds to about 2 hours.

Note that at this time, the liquid medium (d) is preferably removed sufficiently, but need not be completely removed. That is, it is possible that part of the liquid medium (d) remains on the ultraviolet-absorbing antibacterial film 3 within the range not affecting the performance of the ultraviolet-absorbing antibacterial film 3 to be obtained finally. Further, when heating is performed for removing the above-described liquid medium (d), heating for removing the above-described liquid medium (d), that is, temporary heating in general and heating thereafter for producing the silicon oxide-based compound, which is performed as follows as necessary, may be performed sequentially.

After the liquid medium (d) is removed from the applied film as described above, the material component for forming silicon oxide-based matrix such as the above-described hydrolyzable silicon compound is cured. This reaction can be performed at room temperature or while heating. When a cured product (silicon oxide-based matrix) is generated while heating, since the cured product contains organic components, the upper limit of the heating temperature is preferably 250°C, particularly preferably 210°C. Since the cured product can be formed at room temperature, the lower limit thereof is not particularly limited. However, when it is intended to accelerate the reaction by heating, the lower limit of the heating temperature is preferably 60°C, more preferably 80°C. Therefore, this heating temperature is preferably 60°C to 250°C, more preferably 80°C to 210°C. The heating time depends on the composition of the liquid composition to be used for the film formation, and is preferably several minutes to several hours.

Thus, the antibacterial article 1 of this embodiment in which the above-described ultraviolet-absorbing antibacterial film 3 is formed on the base 2 can be obtained. As described above, an antibacterial article of this embodiment and a manufacturing method thereof have been described by exemplifying the antibacterial article 1, but the manufacturing method is not limited to this and can be changed in the range without departing from the spirit and the scope of the present invention.

### EXAMPLES

Hereinafter, the present invention will be described specifically according to examples, but the present invention is not limited to these example. Note that examples 1 to 3, 5 to 12, 14 to 19 are examples, and examples 4, 13 are comparative examples.

Compounds, commercial products (product name), and the like which are used for preparation of each composition for film formation in each example will be cited below.

### <Ultraviolet Absorbent (a)>

- Silylated ultraviolet absorbent solution: 49.2 g of 2,2',4,4'-tetrahydroxybenzophenone (made by BASF), 123.2 g of 3-glycidoxypropyltrimethoxysilane (made by Shi-Etsu Chemical Co., Ltd.), 0.8 g of benzyltriethylammonium chloride (made by JUNSEI CHEMICAL CO., LTD.), and 100 g of butyl acetate (made by JUNSEI CHEMICAL CO., LTD.) were put together and heated to 60°C while stirring, dissolved, and further heated to 120°C and subjected to reaction for 4 hours, to thereby obtain a silylated ultraviolet absorbent solution having a solid content concentration of 63 mass% which contains 4-[2-hydroxy-3-[3-(trimethoxysilyl)propoxy]propoxy]-2,2',4'-trihydroxybenzophenone which is an ultraviolet absorbent. A solid content of the silylated ultraviolet absorbent solution is calculated as an ultraviolet absorbent component (a) of 69% and a binder component (b) of 31 %.
- TINUVIN 360 dispersion liquid: 4 g of TINUVIN 360 (made by BASF, 2,2'-methylenebis[4-(1,1,3,3-tetramethylbutyl)-6-(2H-benzotriazol-2-yl)phenol]), 5.0 g of DISPERBYK-190 (made by BYK-Chemie Japan, 40 mass% aqueous solution of a dispersing agent having an acid value of 10 mgKOH/g and a molecular weight of 2,200), and 31 g of pure water were put together and stirred with a ball mill for 48 hours and thereafter diluted with a predetermined amount of pure water to obtain TINUVIN 360 dispersion liquid having a solid content concentration of 8 mass%.

### <Binder Component (b)>

- Tetraethoxysilane (TEOS): made by JUNSEI CHEMICAL CO., LTD., product name: tetraethoxysilane
- SiO₂ fine particle dispersion liquid: made by NISSAN CHEMICAL INDUSTRIES, LTD., product name: methanol silica sol

### <Antibacterial Active Substance (c)>

- Aqueous silver nitrate solution: silver nitrate (made by JUNSEI CHEMICAL CO., LTD.) was dissolved in pure water to prepare an aqueous silver nitrate solution having a concentration of 1 mass% or a concentration of 10 mass% in terms of silver metal.
- Aqueous silver acetate solution: silver acetate (made by JUNSEI CHEMICAL CO., LTD.) was dissolved in pure water to prepare an aqueous silver acetate solution having a concentration of 1 mass% in terms of silver metal.
- Polon MF-50: made by Shin-Etsu Chemical Co., Ltd., product name; a quaternary ammonium salt-containing silane coupling agent

### <Liquid Medium (d)>

- SOLMIX AP-1: (made by Japan Alcohol Trading Co., Ltd., product name; a mixed solvent of ethanol: 2-propanol: methanol = 85.5: 13.4: 1.1 (mass ratio)

### <First Chelating Agent (e)>

- Ethylenediaminetetraacetic acid diammonium salt monohydrate (made by JUNSEI CHEMICAL CO., LTD.: a molecular weight of 344.32; EDTA-2NH₄). Note that in the following examples and comparative examples, a first chelating agent was added by a molar quantity equal to silver nitrate or silver acetate to the aqueous silver nitrate solution or the aqueous silver acetate solution before preparing a liquid composition and thereby a chelating aqueous silver nitrate solution or a chelating aqueous silver acetate solution was prepared in advance to be used.

### <Infrared Absorbent (f)>

- ITO dispersion liquid: 11.9 g of ITO ultrafine particles (made by Mitsubishi Materials Corporation; mean primary particle diameter 20 nm), 3.0 g of DISPERBYK-190 (made by BYK-Chemie Japan, 40 mass% aqueous solution of a dispersing agent having an acid value of 10 mgKOH/g and a molecular weight of 2200), and 24.2 g of SOLMIX AP-1 were subjected to dispersion processing for 48 hours using a ball mill and thereafter diluted by further adding SOLMIX AP-1 so that an ITO solid content concentration becomes 20 mass%, to obtain ITO dispersion liquid containing the ITO ultrafine particles which are an infrared absorbent.

### <Second Chelating Agent (h)>

- A second chelating agent: NONPOL PMA-50W (made by NOF Corporation a maleic acid polymer solution having a solid content concentration of 50%)

### <Surface Oil Repellent Agent (i)>

- TSL8257 (made by Momentive Performance Materials Inc., product name: fluoroalkylsilane; 15% of the binder component (b), 85% of the surface oil repellent agent component (i))

### <Others>

### <Acid Catalyst>

- Maleic acid (made by JUNSEI CHEMICAL CO., LTD., product name: maleic acid)
- Aqueous hydrochloric acid solution: a special grade hydrochloric acid made by JUNSEI CHEMICAL CO., LTD. was diluted with pure water to a concentration of 0.7 mass% to obtain an aqueous hydrochloric acid solution.

### <Resin; Flexibility-imparting Component>

- SR-SEP: made by SAKAMOTO YAKUHIN KOGYO CO., LTD., product name; sorbitol polyglycidyl ether
- Polyol G300: made by ADEKA CORPORATION polyether polyol

### <Surface Conditioner>

- BYK307 (made by BYK-Chemie Japan, polyether-modified polydimethylsiloxane)

### [Manufacture of Antibacterial Film having Ultraviolet Absorptivity]

### (Example 1)

12.8 g of a silylated ultraviolet absorbent, 15.3 g of tetraethoxysilane, 0.7 g of SiO₂ fine particle dispersion liquid, 50.6 g of SOLMIX AP-1, 19.5 g of pure water, 1.1 g of SR-SEP, 0.116 g of a maleic acid, 0.081 g ofNONPOL PMA-50W, and 0.060 g of BYK307 were put together and stirred at 50°C for 2 hours and thereafter, 0.1 g of an aqueous silver nitrate solution having a concentration of 1 mass% was added thereto to obtain an antibacterial film-forming coating solution 1 having ultraviolet absorptivity (a silver content in a solid content of the coating solution 1 is 0.01 mass%).

Thereafter, the antibacterial film-forming coating solution 1 was applied by spin coating on a high heat ray absorbing green glass (made by ASAHI GLASS COMPANY, LIMITED, commonly called UVFL) of 10 cm x 10 cm x 3.5 mm whose surface was cleaned and thereafter dried at 200°C for 30 minutes in the atmosphere, thereby obtaining a glass plate with antibacterial film 1 having ultraviolet absorptivity.

### (Example 2)

An antibacterial film-forming coating solution 2 having ultraviolet absorptivity was obtained by the same operation as that in Example 1 except that an aqueous silver nitrate solution having a concentration of 1 mass% was set to 0.7 g and pure water was set to 19.0 g (a silver content in a solid content of the coating solution 2 is 0.05 mass%). Further, a glass plate with antibacterial film 2 having ultraviolet absorptivity was obtained by the same operation as that in Example 1 except that the antibacterial film-forming coating solution 1 was changed to the antibacterial film-forming coating solution 2.

### (Example 3)

An antibacterial film-forming coating solution 3 having ultraviolet absorptivity was obtained by the same operation as that in Example 1 except that an aqueous silver nitrate solution having a concentration of 1 mass% was set to 2.8 g and pure water was set to 16.9 g (a silver content in a solid content of the coating solution 3 is 0.2 mass%). Further, a glass plate with antibacterial film 3 having ultraviolet absorptivity was obtained by the same operation as that in Example 1 except that the antibacterial film-forming coating solution 1 was changed to the antibacterial film-forming coating solution 3.

### [Manufacture of Film having Ultraviolet Absorptivity]

### (Example 4)

A film-forming liquid composition coating solution 4 having ultraviolet absorptivity was obtained by the same operation as that in Example 1 except that an aqueous silver nitrate solution was not used (0.0 g) and pure water was set to 19.7 g (a silver content in a solid content of the coating solution 4 is 0.0 mass%). Further, a glass plate with film 4 having ultraviolet absorptivity was obtained by the same operation as that in Example 1 except that the antibacterial film-forming coating solution 1 was changed to the film-forming coating solution 4.

### [Manufacture of Antibacterial Film having Ultraviolet and Infrared Absorptivity]

### (Example 5)

11.7 g of a silylated ultraviolet absorbent, 14.0 g of tetraethoxysilane, 53.7 g of SOLMIX AP-1, 17.9 g of pure water, 1.0 g of SR-SEP, 0.012 g of a maleic acid, 0.081 g of NONPOL PMA-50W, and 0.060 g of BYK307 were put together and stirred at 50°C for 2 hours and thereafter, 7.0 g of ITO dispersion liquid and 0.14 g of an aqueous silver nitrate solution having a concentration of 1 mass% were added thereto to obtain an antibacterial film-forming coating solution 5 having ultraviolet and infrared absorptivity (a silver content in a solid content of the coating solution 5 is 0.01 mass%).

Thereafter, the antibacterial film-forming coating solution 5 was applied by spin coating on a high heat ray absorbing green glass (made by ASAHI GLASS COMPANY, LIMITED, commonly called UVFL) of 10 cm × 10 cm × 3.5 mm whose surface was cleaned and thereafter dried at 200°C for 30 minutes in the atmosphere, thereby obtaining a glass plate with antibacterial film 5 having ultraviolet and infrared absorptivity.

### (Example 6)

An antibacterial film-forming coating solution 6 having ultraviolet and infrared absorptivity was obtained by the same operation as that in Example 5 except that an aqueous silver nitrate solution having a concentration of 1 mass% was set to 0.0014 g and pure water was set to 18.1 g (a silver content in a solid content of the coating solution 6 is 0.0001 mass%). Further, a glass plate with antibacterial film 6 having ultraviolet and infrared absorptivity was obtained by the same operation as that in Example 5 except that the antibacterial film-forming coating solution 5 was changed to the antibacterial film-forming coating solution 6.

### (Example 7)

An antibacterial film-forming coating solution 7 having ultraviolet and infrared absorptivity was obtained by the same operation as that in Example 5 except that an aqueous silver nitrate solution having a concentration of 1 mass% was set to 0.70 g and pure water was set to 17.4 g (a silver content in a solid content of the coating solution 7 is 0.05 mass%). Further, a glass plate with antibacterial film 7 having ultraviolet and infrared absorptivity was obtained by the same operation as that in Example 5 except that the antibacterial film-forming coating solution 5 was changed to the antibacterial film-forming coating solution 7.

### (Example 8)

An antibacterial film-forming coating solution 8 having ultraviolet and infrared absorptivity was obtained by the same operation as that in Example 5 except that an aqueous silver nitrate solution having a concentration of 1 mass% was set to 2.79 g and pure water was set to 15.3 g (a silver content in a solid content of the coating solution 8 is 0.2 mass%). Further, a glass plate with antibacterial film 8 having ultraviolet and infrared absorptivity was obtained by the same operation as that in Example 5 except that the antibacterial film-forming coating solution 5 was changed to the antibacterial film-forming coating solution 8.

### (Example 9)

11.5 g of a silylated ultraviolet absorbent, 13.7 g of tetraethoxysilane, 54.5 g of SOLMIX AP-1, 14.9 g of pure water, 1.0 g of SR-SEP, 0.116 g of a maleic acid, 0.081 g of NONPOL PMA-50W, and 0.060 g of BYK307 were put together and stirred at 50°C for 2 hours and thereafter, 6.9 g of ITO dispersion liquid and 2.75 g of an aqueous silver nitrate solution having a concentration of 10 mass% were added thereto to obtain an antibacterial film-forming coating solution 9 having ultraviolet and infrared absorptivity (a silver content in a solid content of the coating solution 9 is 1.96 mass%). Further, a glass plate with antibacterial film 9 having ultraviolet and infrared absorptivity was obtained by the same operation as that in Example 5 except that the antibacterial film-forming coating solution 5 was changed to the antibacterial film-forming coating solution 9.

### (Example 10)

An antibacterial film-forming coating solution 10 having ultraviolet and infrared absorptivity was obtained by the same operation as that in Example 5 except that 2.79 g of an aqueous silver nitrate solution having a concentration of 1 mass% was changed to 2.79 g of an aqueous silver acetate solution having a concentration of 1 mass% (a silver content in a solid content of the coating solution 10 is 0.2 mass%). Further, a glass plate with antibacterial film 10 having ultraviolet and infrared absorptivity was obtained by the same operation as that in Example 5 except that the antibacterial film-forming coating solution 5 was changed to the antibacterial film-forming coating solution 10.

### (Example 11)

11.7 g of a silylated ultraviolet absorbent, 8.0 g of tetraethoxysilane, 6.93 g of Polon MF-50, 64.6 g of SOLMIX AP-1, 10.2 g of pure water, 0.116 g of a maleic acid, 0.081 g of NONPOL PMA-50W, and 0.060 g of BYK307 were put together and stirred at 50°C for 2 hours and thereafter, 7.0 g of ITO dispersion liquid was added thereto to obtain an antibacterial film-forming coating solution 11 having ultraviolet and infrared absorptivity (a content of Polon MF50 in a solid content of the coating solution 11 is 19.8 mass%). Further, a glass plate with antibacterial film 11 having ultraviolet absorptivity was obtained by the same operation as that in Example 5 except that the antibacterial film-forming coating solution 5 was changed to the antibacterial film-forming coating solution 11.

### (Example 12)

34.6 g ofTINUVIN 360 dispersion liquid, 39.6 g of tetraethoxysilane, 21.7 g of SOLMIX AP-1, 0.63 g of polyol G300, 3.2 g of an aqueous hydrochloric acid solution having a concentration of 0.7 mass% were put together and stirred at 50°C for 2 hours and thereafter, 0.23 g of an aqueous silver nitrate solution having a concentration of 10 mass% was added thereto to obtain an antibacterial film-forming coating solution 12 having ultraviolet absorptivity (a silver content in a solid content of the coating solution 12 is 0.2 mass%). Further, a glass plate with antibacterial film 12 having ultraviolet absorptivity was obtained by the same operation as that in Example 5 except that the antibacterial film-forming coating solution 5 was changed to the antibacterial film-forming coating solution 12.

### [Formation of Ultraviolet and Infrared Absorption Film]

### (Example 13)

A film-forming coating solution 13 having ultraviolet and infrared absorptivity was obtained by the same operation as that in Example 5 except that an aqueous silver nitrate solution was not used (0.0 g) and pure water was set to 18.1 g (a silver content in a solid content of the coating solution 13 is 0.0 mass%). Further, a glass plate with film 13 having ultraviolet and infrared absorptivity was obtained by the same operation as that in Example 5 except that the antibacterial film-forming coating solution 5 was changed to the film-forming coating solution 13.

### [Manufacture of Antibacterial Film having Ultraviolet Absorptivity, Infrared Absorptivity, and Surface Water Repellency]

### (Example 14)

11.7 g of a silylated ultraviolet absorbent, 14.0 g of tetraethoxysilane, 53.5 g of SOLMIX AP-1, 17.9 g of pure water, 1.0 g of SR-SEP, 0.012 g of a maleic acid, 0.081 g of NONPOL PMA-50W, 0.14 g of TSL8257, and 0.060 g of BYK307 were put together and stirred at 50°C for 2 hours and thereafter, 7.0 g of ITO dispersion liquid and 0.14 g of an aqueous silver nitrate solution having a concentration of 1 mass% were added thereto to obtain an antibacterial film-forming coating solution 14 having ultraviolet absorptivity, infrared absorptivity, and surface water repellency (a silver content in a solid content of the coating solution 14 is 0.01 mass%).

Thereafter, the antibacterial film-forming coating solution 14 was applied by spin coating on a high heat ray absorbing green glass (made by ASAHI GLASS COMPANY, LIMITED, commonly called UVFL) of 10 cm × 10 cm × 3.5 mm whose surface was cleaned and thereafter dried at 200°C for 30 minutes in the atmosphere, thereby obtaining a glass plate with antibacterial film 14 having ultraviolet absorptivity, infrared absorptivity, and surface water repellency.

Table 1 and Table 2 collectively present compositions of liquid compositions in Example 1 to Example 14. Note that these tables present a content of each component in a solid content in addition. Note that in Example 1 to Example 4, the ITO dispersion liquid containing the infrared absorbent was not used, but an ITO chelating agent was added in order to function as an acid catalyst in a sol-gel reaction of a binder component.

**[Table 1-1]**

| | | | Exam. 1 | Exam. 2 | Exam. 3 | Exam. 4 | Exam. 5 | Exam. 6 | Exam. 7 |
|---|---|---|---|---|---|---|---|---|---|
| Composition of liquid composition (g) | (a) Ultraviolet absorbent | Silylated ultraviolet absorbent solution | 12.8 | 12.8 | 12.8 | 12.8 | 11.7 | 11.7 | 11.7 |
| | | TINUVIN 360 dispersion liquid | | | | | | | |
| | (b) Binder | TEOS | 15.3 | 15.3 | 15.3 | 15.3 | 14.0 | 14.0 | 14.0 |
| | | SiO₂ fine particle dispersion liquid | 0.7 | 0.7 | 0.7 | 0.7 | | | |
| | (c) Antibacterial active substance | Aqueous silver nitrate solution of 1 mass% | 0.1 | 0.7 | 2.8 | | 0.14 | 0.0014 | 0.70 |
| | | Aqueous silver nitrate solution of 10 mass% | | | | | | | |
| | | Aqueous silver acetate solution of 1 mass% | | | | | | | |
| | | Polon M-F50 | | | | | | | |
| | (d) Liquid medium | AP-1 | 50.6 | 50.6 | 50.6 | 50.6 | 53.7 | 53.7 | 53.7 |
| | | Pure water | 19.5 | 19.0 | 16.9 | 19.7 | 17.9 | 18.1 | 17.4 |
| | (e) First chelating agent | EDTA-2NH₄ | | | | | | | |
| | (f) Infrared absorbent | ITO dispersion liquid | | | | | 7.0 | 7.0 | 7.01 |
| | Resin (flexible component) | SR-SEP | 1.1 | 1.1 | 1.1 | 1.1 | 1.0 | 1.0 | 1.05 |
| | | Polyol G300 | | | | | | | |
| | Acid catalyst | Maleic acid | 0.116 | 0.116 | 0.116 | 0.116 | 0.012 | 0.012 | 0.012 |
| | | Hydrochloric acid of 0.7 mass% | | | | | | | |
| | (h) Second chelating agent | ITO chelating agent | 0.081 | 0.081 | 0.081 | 0.081 | 0.081 | 0.081 | 0.08 |
| | (i) Surface oil repellent agent | TSL8267 | | | | | | | |
| | Surface conditioner | BYK307 | 0.060 | 0.060 | 0.060 | 0.060 | 0.060 | 0.060 | 0.06 |
| Property | Solid content concentration [mass%] | | 14.0% | 14.0% | 14.0% | 14.0% | 14.0% | 14.0% | 14.0% |
| | Liquid composition pH | | 3.5 | 3.5 | 3.5 | 3.5 | 3.9 | 3.9 | 3.9 |

**[Table 1-2]**

| | | | Exam. 1 | Exam. 2 | Exam. 3 | Exam. 4 | Exam. 5 | Exam. 6 | Exam. 7 |
|---|---|---|---|---|---|---|---|---|---|
| Composition of film-forming component | Solid content composition [mass%] | Component (a) | 44.9% | 44.9% | 44.8% | 44.9% | 41.0% | 41.0% | 41.0% |
| | | Component (b) | 45.8% | 45.8% | 45.7% | 45.8% | 40.4% | 40.4% | 40.4% |
| | | Component (c) | 0.01% | 0.05% | 0.20% | 0.0% | 0.01% | 0.0001% | 0.05% |
| | | Component (e) | 0.0% | 0.0% | 0.0% | 0.0% | 0.0% | 0.0% | 0.0% |
| | | Component (f) | 0.0% | 0.0% | 0.0% | 0.0% | 10.0% | 10.0% | 10.0% |
| | | Resin | 8.2% | 8.2% | 8.2% | 8.2% | 7.5% | 7.5% | 7.5% |
| | | Component (h) | 0.6% | 0.6% | 0.6% | 0.6% | 0.6% | 0.6% | 0.6% |
| | | Component (i) | 0.0% | 0.0% | 0.0% | 0.0% | 0.0% | 0.0% | 0.0% |
| | | Surface conditioner | 0.4% | 0.4% | 0.4% | 0.4% | 0.4% | 0.4% | 0.4% |
| | Total solid content | | 100.0% | 100.0% | 100.0% | 100.0% | 100.0% | 100.0% | 100.0% |

**[Table 2-1]**

| | | | Exam. 8 | Exam. 9 | Exam. 10 | Exam. 11 | Exam. 12 | Exam. 13 | Exam. 14 |
|---|---|---|---|---|---|---|---|---|---|
| Composition of liquid composition (g) | (a) Ultraviolet absorbent | Silylated ultraviolet absorbent solution | 11.7 | 11.5 | 11.7 | 11.7 | 34.6 | 11.7 | 11.7 |
| | | TINUVIN 360 dispersion liquid | | | | | | | |
| | (b) Binder | TEOS | 14.0 | 13.7 | 14.0 | 8.0 | 39.6 | 14.0 | 14.0 |
| | | SiO₂ fine particle dispersion liquid | | | | | | | |
| | (c) Antibacterial active substance | Aqueous silver nitrate solution of 1 mass% | 2.79 | 2.75 | | | | | 0.14 |
| | | Aqueous silver nitrate solution of 10 mass% | | | | | 0.23 | | |
| | | Aqueous silver acetate solution of 1 mass% | | | 2.79 | | | | |
| | | Polon M-F50 | | | | 6.93 | | | |
| | (d) Liquid medium | AP-1 | 53.7 | 54.5 | 53.7 | 64.6 | 21.7 | 53.7 | 53.5 |
| | | Pure water | 15.3 | 14.9 | 15.2 | 10.2 | | 18.1 | 17.9 |
| | (e) First chelating agent | EDTA-2NH₄ | | | | | | | |
| | (f) Infrared absorbent | ITO dispersion liquid | 7.0 | 6.9 | 7.0 | 7.0 | | 7.0 | 7.0 |
| | Resin (flexible component) | SR-SEP | 1.0 | 1.0 | 1.0 | | | 1.0 | 1.0 |
| | | Polyol G300 | | | | | 0.6 | | |
| | Acid catalyst | Maleic acid | 0.012 | 0.116 | 0.116 | 0.116 | 3.169 | 0.012 | 0.012 |
| | | Hydrochloric acid of 0.7 mass% | | | | | | | |
| | (h) Second chelating agent | ITO chelating agent | 0.081 | 0.081 | 0.081 | 0.081 | | 0.081 | 0.081 |
| | (i) Surface oil repellent agent | TSL8267 | | | | | | | 0.14 |
| | Surface conditioner | BYK307 | 0.060 | 0.060 | 0.060 | 0.060 | | 0.060 | 0.060 |
| Property | Solid content concentration [mass%] | | 14.0% | 14.0% | 14.0% | 14.0% | 14.0% | 14.0% | 14.1% |
| | Liquid composition pH | | 3.9 | 3.5 | 3.5 | 3.5 | 2.7 | 3.9 | 3.9 |

**[Table 2-2]**

| | | | Exam. 8 | Exam. 9 | Exam. 10 | Exam. 11 | Exam. 12 | Exam. 13 | Exam. 14 |
|---|---|---|---|---|---|---|---|---|---|
| Composition of film-forming component | Solid content composition [mass%] | Component (a) | 41.0% | 40.2% | 41.0% | 41.1% | 13.6% | 41.0% | 40.6% |
| | | Component (b) | 40.3% | 39.6% | 40.3% | 28.1% | 81.9% | 40.4% | 40.2% |
| | | Component (c) | 0.20% | 1.96% | 0.20% | 19.8% | 0.20% | 0.0% | 0.01% |
| | | Component (e) | 0.0% | 0.0% | 0.0% | 0.0% | 0.0% | 0.0% | 0.0% |
| | | Component (f) | 10.0% | 9.8% | 10.0% | 10.0% | 0.0% | 10.0% | 9.9% |
| | | Resin | 7.5% | 7.4% | 7.5% | 0.0% | 4.5% | 7.5% | 7.4% |
| | | Component (h) | 0.6% | 0.6% | 0.6% | 0.6% | 0.0% | 0.6% | 0.6% |
| | | Component (i) | 0.0% | 0.0% | 0.0% | 0.0% | 0.0% | 0.0% | 0.8% |
| | | Surface conditioner | 0.4% | 0.4% | 0.4% | 0.4% | 0.0% | 0.4% | 0.4% |
| | Total solid content | | 100.0% | 100.0% | 100.0% | 100.0% | 100.2% | 100.0% | 100.0% |

### [Test Example]

### <Antibacterial Activity>

An antibacterial activity test was conducted by a film contact method based on JIS Z 2801: 2010 (antibacterial test method) with respect to the glass plates with antibacterial film 1 to 3, 5 to 12, 14 obtained by Examples 1 to 3, 5 to 12, 14, and the glass plates with film 4, 13 obtained by Examples 4, 13. Antibacterial activity values were calculated using results of conducting a test in which only a covering film was used as a comparative test not subjected to an antibacterial process.

### <Optical Characteristic>

The glass plates with antibacterial film 1 to 3, 5 to 12, 14 obtained by Examples 1 to 3, 5 to 12, 14, and the glass plates with film 4, 13 obtained by Examples 4, 13 were measured using a spectrophotometer (manufactured by Hitachi, Ltd., product name: U-4100), and a visible light transmittance (Tv (%)) and an ultraviolet transmittance (Tuv (%)) were calculated in accordance with JIS R 3212: 1998, further yellowness (YI (%)) was calculated in accordance with JIS K 7105: 1981.

### <Contact Angle>

Water or an oleic acid of 1 µL was dropped from a needle to six points at intervals of 1.5 cm, and each contact angle was calculated by a θ/2 method from a radius and a height of a water droplet photographed from a horizontal direction, to regard an average value of the contact angles at the six points as a contact angle of the film.

These results are presented collectively in Table 3 and Table 4.

**[Table 3]**

| | | | Exam. 1 | Exam. 2 | Exam. 3 | Exam. 4 | Exam. 5 | Exam. 6 | Exam. 7 |
|---|---|---|---|---|---|---|---|---|---|
| Liquid composition | Ultraviolet absorbent (a) | | Silylated ultraviolet absorbent | | | | | | |
| | Infrared absorbent (f) | | Not contained | | | | ITO | | |
| | Antibacterial active substance (c) | Type | Silver (silver nitrate) | | | - | Silver (silver nitrate) | | |
| | | Content [mass%] | 0.01 | 0.05 | 0.20 | 0.0 | 0.01 | 0.0001 | 0.05 |
| | Liquid composition pH | | 3.5 | 3.5 | 3.5 | 3.5 | 3.9 | 3.9 | 3.9 |
| Antibacterial article | Film thickness [µm] | | 3.8 | 3.5 | 3.7 | 3.9 | 3.6 | 3.5 | 3.7 |
| | Visible light transmittance Tv [%] | | 73.7 | 73.7 | 73.2 | 73.6 | 72.6 | 72.5 | 72.6 |
| | Ultraviolet transmittance Tuv [%] | | 0.18 | 0.23 | 0.21 | 0.20 | 0.21 | 0.20 | 0.22 |
| | Yellowness YI | | 8.8 | 8.9 | 11.6 | 9.1 | 8.7 | 9.0 | 8.9 |
| | Antibacterial activity | Escherichia coli | 6.0 | 6.0 | 6.0 | 1.6 | 6.0 | 4.7 | 6.0 |
| | | Staphylococcus aureus | 4.1 | 4.1 | 4.1 | 4.1 | 4.1 | 4.1 | 4.1 |
| | Water contact angle | | | | | | 84.6 | | |

**[Table 4]**

| | | | Exam. 8 | Exam. 9 | Exam. 10 | Exam. 11 | Exam. 12 | Exam. 13 | Exam. 14 |
|---|---|---|---|---|---|---|---|---|---|
| Liquid composition | Ultraviolet absorbent (a) | | Silylated ultraviolet absorbent | | | | TINUVIN360 | Silylated ultraviolet absorbent | |
| | Infrared absorbent (f) | | ITO | | | | | | |
| | Antibacterial active substance (c) | Type | Silver (silver nitrate) | | Silver (silver acetate) | Polon MF-50 | Silver (silver nitrate) | - | Silver (silver nitrate) |
| | | Content [mass%] | 0.20 | 1.96 | 0.20 | 19.8 | 0.20 | 0.0 | 0.01 |
| | Liquid composition pH | | 3.9 | 3.4 | 3.4 | 3.4 | 2.7 | 3.9 | 3.9 |
| Antibacterial article | Film thickness [µm] | | 3.2 | 3.7 | 1.7 | 4.0 | 1.5 | 3.8 | 3.1 |
| | Visible light transmittance Tv [%] | | 70.5 | 36.1 | 70.9 | 72.7 | 70.2 | 72.6 | 72.8 |
| | Ultraviolet transmittance Tuv [%] | | 0.27 | 0.05 | 1.01 | 0.17 | 0.88 | 0.19 | 0.60 |
| | Yellowness YI | | 10.9 | 103.9 | 10.7 | 10.2 | 11.6 | 9.0 | 8.5 |
| | Antibacterial activity | Escherichia coli | 6.0 | 6.0 | 5.65 | 3.0 | 3.3 | 1.5 | 5.15 |
| | | Staphylococcus aureus | 4.1 | 4.1 | 4.1 | 4.1 | 4.1 | 4.1 | 4.1 |
| | Water contact angle | | | | | | | | 105.9 |

From these results, containing an antibacterial active substance of silver or quaternary ammonium salt made it possible to form coating films also having antibacterial activity in addition to ultraviolet and infrared absorptivity. That is, the antibacterial activity values of Escherichia coli increased in any of Example 1 to Example 3, Example 5 to Example 12, and Example 14 relative to the glass plates containing no silver in Example 4, 13, and further the antibacterial activity values reached an upper limit value thereof in Example 1 to Example 3, Example 5, Example 7 to Example 9, and thereby it was able to be confirmed that the coating films had good antibacterial activity. Note that in the antibacterial activity values in Examples 1 to 14, 6.0 is the upper limit value with respect to Escherichia coli and 4.1 is an upper limit value with respect to Staphylococcus aureus, and the inoculated bacteria are in a state of being totally destroyed.

### [Improvement of Color Shade]

As presented in Example 7 to Example 9, Example 12, in the antibacterial films having the ultraviolet and infrared absorptivity, it was found that the visible light transmittance Tv and the yellowness YI deteriorated due to an increase in silver content, coloring tended to occur, and a color shade tended to decrease in glass for which transparency is required. Accordingly, the present inventors have studied an improving method thereof.

### <Stabilization by using Chelating agent>

### (Example 15)

11.7 g of a silylated ultraviolet absorbent, 14.0 g of tetraethoxysilane, 53.7 g of SOLMIX AP-1, 15.2 g of pure water, 1.0 g of SR-SEP, 0.116 g of a maleic acid, 0.081 g of NONPOL PMA-50W, and 0.060 g of BYK307 were put together and stirred at 50°C for 2 hours and thereafter, 7.0 g of ITO dispersion liquid and 2.79 g of an aqueous silver nitrate solution having a concentration of 1 mass% were added thereto to obtain an antibacterial film-forming coating solution 15 having ultraviolet and infrared absorptivity (a silver content in a solid content of the coating solution 15 is 0.2 mass%).

Thereafter, the antibacterial film-forming coating solution 15 was applied by spin coating on a high heat ray absorbing green glass (made by ASAHI GLASS COMPANY, LIMITED, commonly called UVFL) of 10 cm × 10 cm × 3.5 mm whose surface was cleaned and thereafter dried at 200°C for 30 minutes in the atmosphere, thereby obtaining a glass plate with antibacterial film 15 having ultraviolet and infrared absorptivity.

### (Example 16)

An antibacterial film-forming coating solution 16 having ultraviolet and infrared absorptivity was obtained by the same operation as that in Example 15 except that 2.79 g of an aqueous silver nitrate solution having a concentration of 1 mass% was changed to 2.847 g of a chelating aqueous silver nitrate solution in which 2.79 g of an aqueous silver nitrate solution having a concentration of 1 mass% and 0.057 g of the first chelating agent are mixed (a silver content in a solid content of the coating solution 16 is 0.2 mass%). Further, a glass plate with antibacterial film 16 having ultraviolet and infrared absorptivity was obtained by the same operation as that in Example 15 except that the antibacterial film-forming coating solution 15 was changed to the antibacterial film-forming coating solution 16.

### (Example 17)

An antibacterial film-forming coating solution 17 having ultraviolet absorptivity was obtained by the same operation as that in Example 15 except that 2.79 g of an aqueous silver nitrate solution having a concentration of 1 mass% was changed to 2.848 g of a chelating aqueous silver acetate solution in which 2.79 g of an aqueous silver acetate solution having a concentration of 1 mass% and 0.058 g of the first chelating agent are mixed (a silver content in a solid content of the coating solution 17 is 0.2 mass%). Further, a glass plate with antibacterial film 17 having ultraviolet and infrared absorptivity was obtained by the same operation as that in Example 15 except that the antibacterial film-forming coating solution 15 was changed to the antibacterial film-forming coating solution 17.

Table 5 collectively presents compositions of liquid compositions in Example 15 to Example 17. Note that this table presents the content of each component in a solid content in addition.

**[Table 5-1]**

| | | | Exam. 15 | Exam. 16 | Exam. 17 |
|---|---|---|---|---|---|
| Composition of liquid composition (g) | (a) Ultraviolet absorbent | Silylated ultraviolet absorbent solution | 11.7 | 11.7 | 11.7 |
| | | TINUVIN 360 dispersion liquid | | | |
| | (b) Binder | TEOS | 14.0 | 14.0 | 14.0 |
| | | SiO₂ fine particle dispersion liquid | | | |
| | (c) Antibacterial active substance | Aqueous silver nitrate solution of 1 mass% | 2.79 | 2.79 | |
| | | Aqueous silver nitrate solution of 10 mass% | | | |
| | | Aqueous silver acetate solution of 1 mass% | | | 2.79 |
| | | Polon M-F50 | | | |
| | (d) Liquid medium | AP-1 | 53.7 | 53.7 | 53.7 |
| | | Pure water | 15.2 | 15.2 | 15.2 |
| | (e) First chelating agent | EDTA-2NH₄ | | 0.057 | 0.058 |
| | (f) Infrared absorbent | ITO dispersion liquid | 7.0 | 7.0 | 7.0 |
| | Resin (flexible component) | SR-SEP | 1.0 | 1.0 | 1.0 |
| | | Polyol G300 | | | |
| | Acid catalyst | Maleic acid | 0.116 | 0.116 | 0.116 |
| | | Hydrochloric acid of 0.7 mass% | | | |
| | (h) Second chelating agent | ITO chelating agent | 0.081 | 0.081 | 0.081 |
| | (i) Surface oil repellent agent | TSL8267 | | | |
| | Surface conditioner | BYK307 | 0.060 | 0.060 | 0.060 |
| Property | Solid content concentration [mass%] | | 14.0% | 14.1% | 14.1% |
| | Liquid composition pH | | 3.4 | 3.4 | 3.4 |

**[Table 5-2]**

| | | | Exam. 15 | Exam. 16 | Exam. 17 |
|---|---|---|---|---|---|
| Composition of film-forming component | Solid content composition [mass%] | Component (a) | 41.0% | 40.8% | 40.8% |
| | | Component (b) | 40.3% | 40.2% | 40.2% |
| | | Component (c) | 0.20% | 0.20% | 0.20% |
| | | Component (e) | 0.0% | 0.4% | 0.4% |
| | | Component (f) | 10.0% | 10.0% | 10.0% |
| | | Resin | 7.5% | 7.5% | 7.5% |
| | | Component (h) | 0.6% | 0.6% | 0.6% |
| | | Component (i) | 0.0% | 0.0% | 0.0% |
| | | Surface conditioner | 0.4% | 0.4% | 0.4% |
| | Total solid content | | 100.0% | 100.0% | 100.0% |

Regarding the obtained glass plates with antibacterial film 15 to 17, similarly to the above, the antibacterial activity, the visible light transmittance, the ultraviolet transmittance, and the yellowness were calculated, and Table 6 presents the results. Note that in antibacterial activity values in Examples 15 to 17, 6.2 is an upper limit value with respect to Escherichia coli and 4.1 is an upper limit value with respect to Staphylococcus aureus, and the inoculated bacteria are in a state of being totally destroyed. From this result, it was found that adding the chelating agent improved both of the visible light transmittance and the yellowness.

**[Table 6]**

| | | | Exam. 15 | Exam. 16 | | Exam. 17 |
|---|---|---|---|---|---|---|
| Liquid composition | Ultraviolet absorbent (a) | | Silylated ultraviolet absorbent | | | |
| | Infrared absorbent (f) | | ITO | | | |
| | Antibacterial active substance (c) | Type | Silver (silver nitrate) | | Silver (silver acetate) | |
| | | Content [mass%] | 0.2 | 0.2 | | 0.2 |
| | Chelating agent | | - | EDTA-2NH₄ | | |
| Antibacterial article | Liquid composition pH | | 3.4 | 3.4 | | 3.4 |
| | Film thickness [µm] | | 3.2 | 3.5 | | 1.7 |
| | Visible light transmittance Tv [%] | | 69.7 | 71.5 | | 71.9 |
| | Ultraviolet transmittance Tuv [%] | | 0.26 | 0.21 | | 1.04 |
| | Yellowness YI | | 11.6 | 9.3 | | 9.9 |
| | Antibacterial activity | Escherichia coli | 6.0 | 6.2 | | 6.2 |
| | | Staphylococcus aureus | 4.1 | 4.1 | | 4.1 |

### <Control of pH of Composition Solution>

### (Example 18)

An antibacterial film-forming coating solution 18 having ultraviolet absorptivity was obtained by the same operation as that in Example 15 except that a maleic acid was set to 0.046 g (a silver content in a solid content of the coating solution 18 is 0.2 mass%). Further, a glass plate with antibacterial film 18 having ultraviolet absorptivity was obtained by the same operation as that in Example 15 except that the antibacterial film-forming coating solution 15 was changed to the antibacterial film-forming coating solution 18.

### (Example 19)

An antibacterial film-forming coating solution 19 having ultraviolet absorptivity was obtained by the same operation as that in Example 15 except that a maleic acid was not used (0.000 g) (a silver content in a solid content of the coating solution 19 is 0.2 mass%). Further, a glass plate with antibacterial film 19 having ultraviolet absorptivity was obtained by the same operation as that in Example 15 except that the antibacterial film-forming coating solution 15 was changed to the antibacterial film-forming coating solution 19.

Table 7 collectively presents compositions of liquid compositions in Example 18 to Example 19. Note that this table presents the content of each component in a solid content in addition.

**[Table 7-1]**

| | | | Exam. 18 | Exam. 19 |
|---|---|---|---|---|
| Composition of liquid composition (g) | (a) Ultraviolet absorbent | Silylated ultraviolet absorbent solution | 11.7 | 11.7 |
| | | TINUVIN 360 dispersion liquid | | |
| | (b) Binder | TEOS | 14.0 | 14.0 |
| | | SiO₂ fine particle dispersion liquid | | |
| | (c) Antibacterial active substance | Aqueous silver nitrate solution of 1 mass% | 2.79 | 2.79 |
| | | Aqueous silver nitrate solution of 10 mass% | | |
| | | Aqueous silver acetate solution of 1 mass% | | |
| | | Polon M-F50 | | |
| | (d) Liquid medium | AP-1 | 53.7 | 53.7 |
| | | Pure water | 15.2 | 15.3 |
| | (e) First chelating agent | EDTA-2NH₄ | | |
| | (f) Infrared absorbent | ITO dispersion liquid | 7.0 | 7.0 |
| | Resin (flexible component) | SR-SEP | 1.0 | 1.0 |
| | | Polyol G300 | | |
| | Acid catalyst | Maleic acid | 0.046 | |
| | | Hydrochloric acid of 0.7 mass% | | |
| | (h) Second chelating agent | ITO chelating agent | 0.081 | 0.081 |
| | (i) Surface oil repellent agent | TSL8267 | | |
| | Surface conditioner | BYK307 | 0.060 | 0.060 |
| Property | Solid content concentration [mass%] | | 14.0% | 14.0% |
| | Liquid composition pH | | 3.7 | 4.5 |

**[Table 7-2]**

| | | | Exam. 18 | Exam. 19 |
|---|---|---|---|---|
| Composition of film-forming component | Solid content composition [mass%] | Component (a) | 41% | 41% |
| | | Component (b) | 40% | 40% |
| | | Component (c) | 0% | 0% |
| | | Component (e) | 0% | 0% |
| | | Component (f) | 10% | 10% |
| | | Resin | 7% | 7% |
| | | Component (h) | 1% | 1% |
| | | Component (i) | 0% | 0% |
| | | Surface conditioner | 0% | 0% |
| | Total solid content | | 100% | 100% |

Regarding the obtained glass plates with antibacterial film 18, 19 and the glass plates with antibacterial film 8, 15 as ones whose pH value of a liquid composition was contrasted with that of the glass plates with antibacterial film 18, 19, similarly to the above, the antibacterial activity, the visible light transmittance, the ultraviolet transmittance, and the yellowness were calculated, and Table 8 presents results thereof. Note that in antibacterial activity values in Examples 18 to 19, 6.0 is an upper limit value with respect to Escherichia coli and 4.1 is an upper limit value with respect to Staphylococcus aureus, and the inoculated bacteria are in a state of being totally destroyed. From this result, it was found that increasing the pH value of the liquid composition improved both of the visible light transmittance and the yellowness. Further, Table 9 presents Examples (Example 8', Example 15', Example 18', Example 19') in which only the film thickness of the antibacterial film is changed in the same composition as each other. From this result, it was found that making the film thickness small improves both the visible light transmittance and the yellowness.

**[Table 8]**

| | | | Exam. 15 | Exam. 18 | Exam. 8 | Exam. 19 |
|---|---|---|---|---|---|---|
| Liquid composition | Ultraviolet absorbent (a) | | Silylated ultraviolet absorbent | | | |
| | Infrared absorbent (f) | | ITO | | | |
| | Antibacterial active substance (c) | Type | Silver (silver nitrate) | | | |
| | | Content [mass%] | 0.20 | | | |
| | Liquid composition pH | | 3.4 | 3.7 | 3.9 | 4.5 |
| Antibacterial article | Film thickness [µm] | | 3.2 | 3.2 | 3.2 | 3.0 |
| | Visible light transmittance Tv [%] | | 69.7 | 69.9 | 70.5 | 71.25 |
| | Ultraviolet transmittance Tuv [%] | | 0.26 | 0.26 | 0.27 | 0.32 |
| | Yellowness YI | | 11.6 | 11.4 | 10.9 | 10.5 |
| | Antibacterial activity | Escherichia coli | 6.0 | 6.0 | 6.0 | 6.0 |
| | | Staphylococcus aureus | 4.1 | 4.1 | 4.1 | 4.1 |

**[Table 9]**

| | | | Exam. 15' | Exam. 18' | Exam. 8' | Exam. 19' |
|---|---|---|---|---|---|---|
| Liquid composition | Ultraviolet absorbent (a) | | Silylated ultraviolet absorbent | | | |
| | Infrared absorbent (f) | | ITO | | | |
| | Antibacterial active substance (c) | Type | Silver (silver nitrate) | | | |
| | | Content [mass%] | 0.20 | | | |
| | Liquid composition pH | | 3.4 | 3.7 | 3.9 | 4.5 |
| Antibacterial article | Film thickness [µm] | | 1.8 | 1.7 | 1.7 | 1.7 |
| | Visible light transmittance Tv [%] | | 71.4 | 71.8 | 72.3 | 72.6 |
| | Ultraviolet transmittance Tuv [%] | | 1.0 | 1.1 | 1.2 | 1.2 |
| | Yellowness YI | | 9.8 | 9.3 | 9.6 | 8.8 |
| | Antibacterial activity | Escherichia coli | 6.0 | 6.0 | 6.0 | 6.0 |
| | | Staphylococcus aureus | 4.1 | 4.1 | 4.1 | 4.1 |

### <Change with Passage of Time in Color Shade>

Next, regarding the glass plates with antibacterial film 3, 6 to 8, 13 in Examples 3, 6 to 8, 13, a change with passage of time in the yellowness was examined by an accelerated weathering test (SXe irradiation test) and a damp heat test in a RH environment of 50°C and 95%. Table 10 presents the results.

**[Table 10]**

| | | Exam. 3 | Exam. 6 | Exam. 7 | Exam. 8 | Exam. 13 |
|---|---|---|---|---|---|---|
| Yellowness YI | Initial value | 11.6 | 8.7 | 8.9 | 11.6 | 9.0 |
| | After 1000 hours by SXeWOM | 9.8 | 9.5 | 9.5 | 14.8 | 10 |
| Antibacterial property | Initial value | 6.0 | 6.0 | 6.0 | 6.0 | 1.5 |
| | After 1000 hours by SXeWOM | 5.3 | 5.3 | 5.3 | 5.3 | 0.12 |

From this result, it was found that the smaller the silver content is, the more unlikely to occur the change with passage of time in the yellowness is.

Note that regarding the glass plates after the accelerated weathering test of 1000 hours and the glass plates after 1000 hours under the RH environment of 50°C and 95%, the antibacterial activity was examined, and then it was found that the values are an upper limit and the antibacterial activity was retained sufficiently. Note that in an initial value of the antibacterial activity (Escherichia coli) in each example, 6.0 is an upper limit value, and in a value after 1000 hours by SXeWOM in each example, 5.3 is an upper limit value, and the inoculated bacteria are in a state of being totally destroyed.

From the above result, the antibacterial article formed using the liquid composition of this embodiment has a good antibacterial property and has ultraviolet absorptivity in addition. Further, when a transparent base such as glass is used as the base, its visible light transmittance, yellowness, and the like are good, which is suitable for glass for an automobile and glass for a building.

### INDUSTRIAL APPLICABILITY

A liquid composition of the present invention makes it possible to simply form a resin film having ultraviolet absorptivity and an antibacterial property on a base, and can be widely applied to various products, for example, a product which is required not to permit transmitting ultraviolet rays inside and at the same time to keep a surface clean, such as a window member for a vehicle such as an automobile or a window member for a building, a product which is required to prevent deterioration of the base itself due to ultraviolet rays and at the same time to keep the surface clean, and the like.

### EXPLANATION OF REFERENCE NUMERALS

1 ... antibacterial article, 2 ... base, 3 ... ultraviolet-absorbing antibacterial film.

## Claims

1. A liquid composition comprising:
an ultraviolet absorbent (a) containing one or more compounds selected from a benzophenone-based compound, a triazine-based compound, and a benzotriazole-based compound;
a binder component (b) mainly constituted of a material component for forming silicon oxide-based matrix;
at least one type of an antibacterial active substance (c) selected from silver, copper, zinc, and a hydrolyzable silicon compound having an antibacterial activity group; and
a liquid medium (d).

2. The liquid composition according to claim 1, wherein the antibacterial active substance (c) is silver and exists in a state of silver alone or silver ions, and a content thereof in a solid content in the liquid medium is 0.00001 to 1 mass%.

3. The liquid composition according to claim 1, wherein the antibacterial active substance (c) is copper and exists in a state of copper alone or copper ions, and a content thereof in a solid content in the liquid medium is 0.00001 to 1 mass%.

4. The liquid composition according to claim 1, wherein the antibacterial active substance (c) is zinc and exists in a state of zinc alone or zinc ions, and a content thereof in a solid content in the liquid medium is 0.00001 to 1 mass%.

5. The liquid composition according to claim 1, wherein the antibacterial active substance (c) is a hydrolyzable silicon compound having an antibacterial activity group, the antibacterial activity group is a quaternary ammonium group, and a content thereof in a solid content in the liquid medium is 1 to 25 mass%.

6. The liquid composition according to any one of claims 1 to 4, wherein the antibacterial active substance (c) is metal selected from silver, copper, and zinc and contains a first chelating agent (e) having a chelate-forming ability with the metal.

7. The liquid composition according to claim 6, wherein the first chelating agent (e) is at least one type of a chelating agent selected from an ethylenediaminetetraacetic acid (EDTA), a 1-hydroxyethylidene-1,1-diphosphonic acid (HEDP), salt of the ethylenediaminetetraacetic acid (EDTA) and salt of the 1-hydroxyethylidene-1,1-diphosphonic acid (HEDP).

8. The liquid composition according to any one of claims 1 to 7, wherein a pH value of the liquid composition is 2 to 5.

9. The liquid composition according to any one of claims 1 to 8, containing a hydroxyl group-containing benzophenone-based compound as the ultraviolet absorbent (a).

10. The liquid composition according to claim 9, containing, as the ultraviolet absorbent (a), one or more compounds selected from the benzophenone-based compound, the triazine-based compound, and the benzotriazole-based compound which contain a silyl group having a hydrolyzable group.

11. The liquid composition according to any one of claims 1 to 10, containing a tetrafunctional alkoxysilane compound as the binder component (b).

12. The liquid composition according to any one of claims 1 to 11, further comprising an infrared absorbent (f) containing one or more oxides selected from a tin-doped indium oxide, an antimony-doped tin oxide, and a composite tungsten oxide.

13. The liquid composition according to any one of claims 1 to 12, further comprising a surface oil repellent agent (i) containing a silicon compound whose surface tension is 17.5 to 30 mN/m.

14. An antibacterial article having ultraviolet absorptivity, the antibacterial article comprising: a base; and an ultraviolet-absorbing antibacterial film made with the liquid composition according to any one of claims 1 to 13 on a surface of the base.

15. The antibacterial article according to claim 14, wherein the base is a glass substrate.

16. The antibacterial article according to claim 14 or 15, wherein a visible light transmittance of the antibacterial article which is measured in accordance with JIS R3212 (1998) is 70% or more, and an ultraviolet transmittance of the antibacterial article which is measured in accordance with ISO-9050 (1990) is 3% or less.

17. The antibacterial article according to any one or claims 14 to 16, wherein a thickness of the ultraviolet-absorbing antibacterial film is 1.0 to 7.0 µm.
